# EUROPEAN PATENT SPECIFICATION

(11) **EP 4 284 068 B1**
(45) Date of publication and mention of the grant of the patent: **02.04.2025**
(21) Application number: 21940247.6
(22) Date of filing: 21.05.2021
(51) Int. Cl.: H04W 48/02, H04B 7/185, H04W 56/00, H04W 48/20, H04W 84/06, H04W 48/04, H04W 48/12, H04W 48/16

(54) **CELL ACCESS CONTROL METHOD AND TERMINAL DEVICE**
VERFAHREN ZUR ZELLENZUGANGSSTEUERUNG UND ENDGERÄT
PROCÉDÉ DE CONTRÔLE D'ACCÈS AUX CELLULES ET DISPOSITIF TERMINAL

(43) Date of publication of application: 29.11.2023
(73) Proprietor: GUANGDONG OPPO MOBILE TELECOMMUNICATIONS CORP., LTD., Dongguan, Guangdong 523860 (CN)
(72) Inventor: LI, Haitao, Dongguan, Guangdong 523860 (CN); HU, Yi, Dongguan, Guangdong 523860 (CN)
(74) Representative: Ipside
(86) International application number: PCT/CN2021/095333
(87) International publication number: WO 2022/241794

(56) References cited:
- EP-A1- 4 178 268
- EP-A1- 4 266 758
- WO-A1-2021/028853
- CN-A- 103 210 686
- CN-A- 104 584 462
- CN-A- 111 918 359
- CN-A- 112 690 022
- US-A1- 2013 303 162
- US-A1- 2015 215 843
- ERICSSON: "Remaining details on Random access for NTN", vol. RAN WG2, no. Reno, Nevada, US; 20191118 - 20191122, 7 November 2019 (2019-11-07), XP051815978, Retrieved from the Internet <URL:https://ftp.3gpp.org/tsg_ran/WG2_RL2/TSGR2_108/Docs/R2-1915567.zip R2-1915567 Remaining details on Random access for NTN.docx> [retrieved on 20191107]
- SAMSUNG: "Considerations on access barring and UE capability", 3GPP DRAFT; R1-2003913, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20200525 - 20200605, 15 May 2020 (2020-05-15), Mobile Competence Centre ; 650, route des Lucioles ; F-06921 Sophia-Antipolis Cedex ; France , XP051885679

## Description

### TECHNICAL FIELD

Embodiments of the present disclosure relate to the technical field of communication, and in particular to a method for controlling cell access and a terminal device.

### BACKGROUND

In 5th-generation (5G) New Radio (NR) system, a Non-Terrestrial Network (NTN) technology is introduced. The NTN technology generally provides communication services to terrestrial users by means of satellite communication.

Compared with the traditional terrestrial cellular networks, a signal transmission delay between a terminal device and a satellite in an NTN system is relatively great. In addition, due to a large coverage of the satellite, for different terminal devices within the coverage of the same satellite, the signal transmission delays between these terminal devices and the satellite may also be significantly different due to different positions of the terminal devices. Therefore, it is necessary to make some technical improvements on cell access control based on characteristics of the NTN system. Patent applications CN111918359A and WO2021028853A1 provide teachings related to the technical field of the application.

### SUMMARY

The invention comprises a method for controlling cell access and a terminal device as set forth in the appended set of claims.

Some preferred embodiments are defined by the dependent claims.

According to a first aspect of the invention, a method for controlling cell access is provided as set forth in claim 1.

According to a second aspect of the invention, terminal device is provided as set forth in claim 9.

The technical solution provided by embodiments of the present disclosure may include the following beneficial effects.

According to the embodiments of the present disclosure, a terminal device determines whether the terminal device is allowed to access a cell corresponding to a network device or barred from accessing the cell according to the first information from the network device (the first information is used for determining whether a respective terminal device corresponding to each of the first terminal type and the second terminal type is allowed to access the cell corresponding to the network device or barred from accessing the cell) and a terminal type of the terminal device. Therefore, cell access by terminal devices with different types can be controlled separately and more flexibly, and network resources can be better utilized.

### BRIEF DESCRIPTION OF THE DRAWINGS

FIG. 1 is a schematic diagram of a network architecture with a transparent payload satellite provided by an embodiment of the present disclosure;
FIG. 2 is a schematic diagram of a network architecture with a regenerative payload satellite provided by an embodiment of the present disclosure;
FIG. 3 exemplarily illustrates a schematic diagram of a preamble receiving window in an NTN system;
FIG. 4 exemplarily illustrates a schematic diagram of overlapped preamble receiving windows in an NTN system;
FIG. 5 is a flowchart of a method for controlling cell access provided by an embodiment of the present disclosure;
FIG. 6 is a schematic diagram of a determination that access is allowed or barred based on cell access barred indication information provided by an embodiment of the present disclosure;
FIG. 7 is a schematic diagram of a determination that access is allowed or barred based on cell access barred indication information provided by another embodiment of the present disclosure;
FIG. 8 is a schematic diagram of a determination that access is allowed or barred based on random access resource configuration information provided by an embodiment of the present disclosure;
FIG. 9 is a schematic diagram of a determination that access is allowed or barred based on random access resource configuration information provided by another embodiment of the present disclosure;
FIG. 10 is a schematic diagram of a determination that access is allowed or barred based on UAC configuration information provided by an embodiment of the present disclosure;
FIG. 11 is a schematic diagram of a determination that access is allowed or barred based on UAC configuration information provided by another embodiment of the present disclosure;
FIG. 12 is a block diagram of an apparatus for controlling cell access provided by an embodiment of the present disclosure;
FIG. 13 is a block diagram of an apparatus for controlling cell access provided by an embodiment not being part of the present disclosure;
FIG. 14 is a structural diagram of a terminal device provided by the present disclosure;
FIG. 15 is a structural diagram of a network device provided by an embodiment not being part of the present disclosure.

### DETAILED DESCRIPTION

In order to make the purpose, technical solution and advantages of the present disclosure clearer, embodiments of the present disclosure will be described in further detail below in conjunction with the accompanying drawings.

The network architecture and service scenario described by embodiments of the present disclosure are intended to more clearly illustrate the technical solution of embodiments of the present disclosure, and do not constitute a limitation to the technical solution provided by embodiments of the present disclosure. Those ordinarily skilled in the art may know that with the evolution of the network architecture and the emergence of new service scenarios, the technical solution provided by embodiments of the present disclosure is applicable to similar technical problems.

At present, the NTN technology is studied by relevant standard organizations, the NTN technology generally provides communication services to terrestrial users by means of satellite communication. Compared with terrestrial cellular communication networks, satellite communication has many unique advantages. First of all, the satellite communication is not limited by regions of the users. For example, general terrestrial communication may not cover regions such as oceans, mountains, deserts, etc., where communication devices cannot be set up or communication coverage cannot be done due to sparse population. For the satellite communication, since one satellite may cover a large area of ground and the satellite may orbit around the earth in orbital motion, theoretically, every corner on the earth can be covered by the satellite communication. Secondly, the satellite communication has great social value. The satellite communication can cover remote mountainous regions, and poor and underdeveloped countries or regions at a lower cost, so that people in these regions can enjoy advanced voice communication and mobile Internet technology, which is conducive to narrowing the digital divide with developed areas and promoting the development of these regions. Thirdly, the satellite communication distance is long, and the communication cost may not increase significantly with the increase of communication distance. Finally, the satellite communication has high stability and may not be limited by natural disasters.

Communication satellites are classified into Low-Earth Orbit (LEO) satellites, Medium-Earth Orbit (MEO) satellites, Geostationary Earth Orbit (GEO) satellites, High Elliptical Orbit (HEO) satellites, and so on according to different orbital altitudes. At present, LEO and GEO are mainly studied.

### 1. LEO

The altitude of the LEO satellites ranges from 500 km to 1500 km, and the corresponding orbital period is about 1.5 hours to 2 hours. Signal propagation delay of single-hop communication between users is generally less than 20 ms. The maximum satellite visible duration is 20 minutes. The signal propagation distance is short, link loss is small, and transmission power requirements for the terminal devices are not high.

### 2. GEO

The orbital altitude of the GEO satellites is 35,786 km and the rotation period around the Earth is 24 hours. The signal propagation delay of single-hop communication between users is generally 250 ms.

In order to ensure the coverage of satellites and improve the system capacity of the entire satellite communication system, a satellite covers the ground with multiple beams, and one satellite may form dozens or even hundreds of beams to cover the ground. A satellite beam can cover the ground area with a diameter of dozens to hundreds of kilometers.

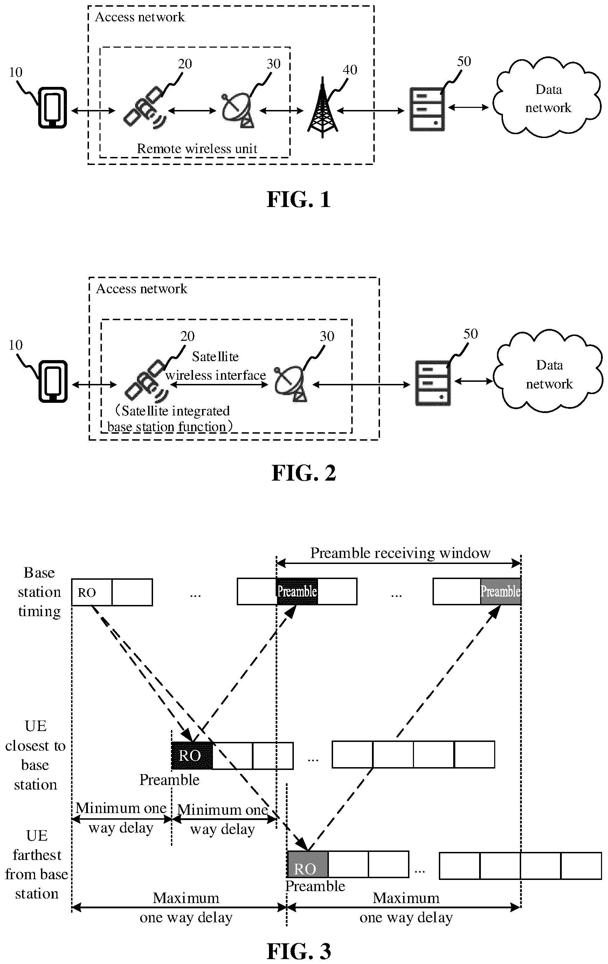

Referring to FIG. 1, it is illustrated a schematic diagram of a satellite network architecture, in which the communication satellite is a transparent payload satellite. As illustrated in FIG. 1, the satellite network architecture includes: a terminal device 10, a satellite 20, an NTN gateway 30, an access network device 40, and a core network device 50.

The terminal device 10 and the access network device 40 may communicate through an air interface (such as a Uu interface). In the architecture illustrated in FIG. 1, the access network device 40 may be deployed on the ground, and the uplink and downlink communications between the terminal device 10 and the access network device 40 may be relayed through the satellite 20 and the NTN gateway 30 (typically located on the ground). Taking the uplink transmission as an example, the terminal device 10 sends the uplink signal to the satellite 20, and the satellite 20 forwards this uplink signal to the NTN gateway 30, the NTN gateway 30 forwards this uplink signal to the access network device 40, and then the access network device 40 sends this uplink signal to the core network device 50. Taking the downlink transmission as an example, the downlink signal is sent by the core network device 50 to the access network device 40. The access network device 40 sends the downlink signal to the NTN gateway 30, the NTN gateway 30 forwards this downlink signal to the satellite 20, and the satellite 20 forwards this downlink signal to the terminal device 10.

Referring to FIG. 2, it is illustrated a schematic diagram of another satellite network architecture, in which the communication satellite is a regenerative payload satellite. As illustrated in FIG. 2, the satellite network architecture includes: a terminal device 10, a satellite 20, an NTN gateway 30 and a core network device 50.

In the architecture illustrated in FIG. 2, functions of the access network device 40 are integrated in the satellite 20, i.e., the satellite 20 has the functions of the access network device 40. The terminal device 10 and the satellite 20 may communicate through an air interface (such as a Uu interface). The satellite 20 and the NTN gateway 30 (generally located on the ground) may communicate through a Satellite Radio Interface (SRI).

In the architecture illustrated in FIG. 2, taking the uplink transmission as an example, the terminal device 10 sends the uplink signal to the satellite 20, and the satellite 20 forwards this uplink signal to the NTN gateway 30, the NTN gateway 30 sends this uplink signal to the core network device 50. Taking the downlink transmission as an example, the downlink signal is sent by the core network device 50 to the NTN gateway 30, the NTN gateway 30 forwards this downlink signal to the satellite 20, and the satellite 20 forwards this downlink signal to the terminal device 10.

In the above-described network architectures illustrated in FIG. 1 and FIG. 2, the access network device 40 is a device for providing wireless communication services to the terminal device 10. A connection may be established between the access network device 40 and the terminal device 10, through the connection the communication including signaling and data interaction can be performed. The number of the access network devices 40 may be more than one, and two adjacent access network devices 40 may also communicate in a wired or wireless manner. The terminal device 10 may switch between different access network devices 40, i.e., establish connections with different access network devices 40.

Taking a cellular communication network as an example, the access network device 40 in the cellular communication network may be a base station. The base station is an apparatus deployed in an access network for providing a wireless communication function for the terminal device 10. The base station may include various forms of macro base stations, micro base stations, relay stations, access points, and the like. In systems with different wireless access technologies, the names of devices with base station functions may be different, for example, in 5G NR systems, they are referred to as gNodeB or gNB. With the evolution of communication technology, the name "base station" may change. For convenience of description, in the embodiments of the present disclosure, the above-mentioned apparatuses providing wireless communication functions for the terminal device 10 are collectively referred to as base stations or access network devices.

In addition, the terminal device 10 involved in embodiments of the present disclosure may include various devices with wireless communication functions such as handheld devices, vehicle-mounted devices, wearable devices, computing devices or other processing devices connected to a wireless modem, as well as various forms of User Equipment (UE), Mobile Stations (MSs), terminal devices, and the like. For convenience of description, in the embodiments of the present disclosure, the above-mentioned devices are collectively referred to as terminal devices. In embodiments of the present disclosure, the term "UE" is used in some places to represent "terminal device". In embodiments of the present disclosure, the "network device" may be an access network device (such as a base station) or a satellite.

In addition, taking the 5G NTN network as an example, the NTN network may include multiple satellites 20. A satellite 20 may cover a certain range of the ground area, to provide wireless communication services to terminal devices 10 in this ground area. In addition, the satellite 20 may make orbital motion around the Earth, and by arranging multiple satellites 20, communication coverage of different areas of the Earth surface can be achieved.

In addition, in embodiments of the present disclosure, the terms "network" and "system" are commonly used interchangeably, and those skilled in the art can understand their meanings. The technical solution described in embodiments of the present disclosure may be applied to Long Term Evolution (LTE) systems, 5G NR systems, subsequent evolution systems of the 5G NR systems, or other communication systems, which are not limited in the present disclosure.

Before introducing the technical solution of the present disclosure, some background technical knowledge related in the present disclosure is introduced and illustrated.

### Cellbarred mechanism

In an initial access stage, after time-frequency domain synchronization, UE firstly reads a Master Information Block (MIB). The MIB contains the following two parameters related to cell selection and reselection:
1. cellBarred: indicating whether all UEs are barred from accessing the current cell. If cellBarred indicates barred, the UE in a Radio Resource Control (RRC) idle state and an RRC inactive state may not reside in the cell.
2. intraFreqReselection: indicating whether the UE is allowed to select or reselect the suboptimal cell with the current frequency when the current cell is the optimal cell with the current frequency and the UE is not allowed to reside in the current cell.

### Unified Access Control (UAC) mechanism

UAC mechanism is introduced in NR for control the load on the network side. Firstly, an access identity and an access category are defined.

The access identity represents the identity characteristics of the UE itself. At present, the standardized access identities in NR are 0 to 15, where 3 to 10 are undefined.

The access category represents service attributes of UE-initiated calls, where 0 to 7 are standardized access types, 32 to 63 are access categories defined by operators, and others are undefined access categories.

The Radio Access Network (RAN) broadcasts access control information related to the access category and the access identity, and the UE Access Stratum (AS) executes an Access Class Barrring (ACB) check according to the broadcast access control information and the access category and access identity provided by AS/Non Access Stratum (NAS).

The UAC parameters are configured for each access category and for each Public Land Mobile Network (PLMN).

The network side is configured with up to 8 UAC-BarringInfoSets, and each UAC-BarringInfoSet contains the following parameters:
(a) uac-BarringFactor: representing the probability of an access attempt being allowed to pass.
(b) uac-BarringTime: for determining the minimum time interval between the failure of an access attempt initiated by a certain access category and the re-initiation of the next access attempt by the same access category.
(c) uac-BarringForAccessIdentity: for respectively determining whether each access identity allows the access attempt.

Each access category is associated with a UAC-BarringInfoSet, the total number of access categories are 64 (access category 0 does not need to be configured). The UAC parameters may be configured for each PLMN, and each PLMN is associated with one UAC-BarringPerCatList. If UAC parameters do not configured for each PLMN information, the above configuration is applicable to all PLMNs.

For access category 1, uac-AccessCategory1-SelectionAssistanceInfo is configured, to assist in determining whether the ACB check is performed on the access category 1.

Based on the above UAC configuration parameters, the UE performs the UAC check process as follows.
In S1: the premise is that neither timer T390 nor T302 operates and the access category is not 0; then the determination is performed according to UAC configuration information, and the process proceeds to S2;
In S2: if the bit in the uac-BarringForAccessIdentity corresponding to the access identity is set to 0, the access is allowed, if the corresponding bit is set to 1, further determination is needed, and the process proceeds to S3; and
In S3: a random number 0 ≤ rand < 1 is generated. If the random number rand is less than uac-BarringFactor, the access is allowed, otherwise, the access is barred. If the access is barred, a random number 0 ≤ rand < 1 is generated, and T390 is started, where T390 = (0.7 + 0.6 * rand) * uac-BarringTime.

For events triggered by the NAS, the NAS decides the access identity, the access category, and a cause value. The NAS provides the access identity and the access category to the AS, and the AS performs ACB check, if the ACB check is passed, the AS notifies the NAS, and the NAS provides the cause value to the AS. Based on the ACB check feedback of AS, the NAS stops or allows service transmission.

For events triggered by the AS, such as paging triggering and RAN-based Notification Area Update (RNAU) triggering (information interaction between NAS and AS belongs to UE implementation behavior), in which:
Paging: the access category is 0 and paging is not controlled by ABC. The cause value is rewritten, NAS and AS interact, and NAS provides the cause value information.

RNAU: the access category is 8 and RNAU is decided by the AS, the access identity is provided by NAS to AS, and decision of how and when to perform interaction belongs to implementation. The cause value is decided by the AS as rna-Update.

Compared with the cellular network used in traditional NR, a signal propagation delay between UE and a satellite in an NTN increases greatly. In addition, due to a large coverage of the satellite, for different UEs within the coverage of the same satellite, the signal transmission delays between these terminal devices and the satellite may also be significantly different due to different positions of the UEs. According to the discussion of NTN application scenarios in the current standardization process, the maximum difference of signal transmission delays between different UEs and the base station in an NTN cell is 10.3ms. Such a large difference in signal transmission delays may lead to a problem that preambles sent by different UEs, using the same Random Access Channel (RACH) resource to send the preambles, arrive at the base station at different times. In order to ensure that the base station can receive the preambles sent by different UEs in the cell, a length of a preamble receiving window on the base station side should be extended to 2* (maximum one way delay-minimum one way delay), as illustrated in FIG. 3.

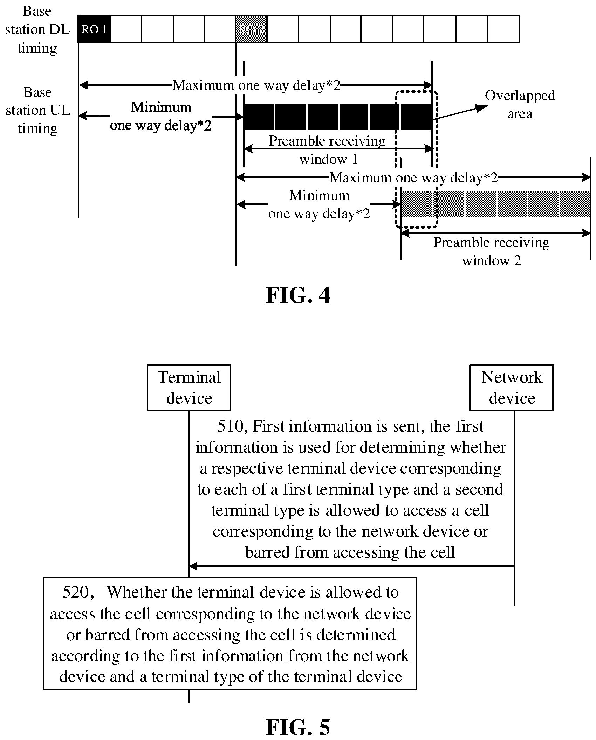

After receiving a preamble, the base station needs to know at which RACH Occasion (RO) the preamble is sent by the UE, so as to determine an initial Timing Advance (TA) of the UE. In the NTN, since a long preamble receiving window is needed, as illustrated in FIG. 4, if the time interval between adjacent ROs in the time domain is less than the window length of the preamble receiving window, the problem that the preamble receiving windows corresponding to ROs at different times overlap in the time domain may be occurred, so that the base station may receive the preambles in the overlapped area of multiple preamble receiving windows, and the base station may not know which RO the UE sends the preamble, and then it is unable to determine the TA of the UE.

For the problem of ambiguity of the preamble receiving windows that may occur on the network side in NTN, an idea of solution is to ensure that the time interval between adjacent ROs in the time domain is not less than the length of the RACH receiving window when configuring RACH resources by the network. However, which may cause the disadvantage that the RACH capacity may be reduced.

In addition, for a terminal device with TA pre-compensation capability, in random access process of the terminal device, the UE may estimate the TA by itself and use the estimated TA to send the preamble. Since the UE has adjusted its uplink timing before sending the preamble, thus for the UE with TA pre-compensation capability, the network may not actually need to use the above extended RACH receiving window to receive the preamble. Therefore, for the terminal device with TA pre-compensation capability, since the extended RACH receiving window is not needed to receive the preamble, there is no limitation on the time interval between adjacent ROs, thereby improving the RACH capacity to a certain extent.

In the present disclosure, a terminal device determines whether the terminal device is allowed to access a cell corresponding to a network device or barred from accessing the cell according to first information from the network device (the first information is for determining whether a respective terminal device corresponding to each of the first terminal type and the second terminal type is allowed to access the cell corresponding to the network device or barred from accessing the cell) and a terminal type of the terminal device. Therefore, cell access by terminal devices with different types can be controlled separately and more flexibly, and network resources can be better utilized.

In addition, in some embodiments, in response to the terminal device being of the first terminal type (for example, the terminal device has a TA pre-compensation capability, or the terminal device has a positioning capability, or the terminal device has the TA pre-compensation capability and the positioning capability), the terminal device firstly determines whether the terminal device corresponding to the first terminal type is allowed to access the cell corresponding to the network device. Further, if it is determined that the terminal device corresponding to the first terminal type is barred from accessing the cell corresponding to the network device, the terminal device further determines whether the terminal device corresponding to the second terminal type is allowed to access the cell corresponding to the network device. Through two-step determination, the terminal device can be ensured to access the network using the TA pre-compensation capability more greatly, so as to ensure the RACH capacity, and the terminal device may access the network without using the TA pre-compensation capability when the network is congested, thereby increasing the opportunity of successful access and improving the access success rate.

Hereinafter, the technical solution of the present disclosure will be introduced and illustrated by several exemplary embodiments.

Referring to FIG. 5, it is illustrated a flowchart of a method for controlling cell access provided by an embodiment of the present disclosure. The method may be applied to the network architecture illustrated in FIG. 1 or FIG. 2. The method may include the following operations (510 to 520).

In operation 510, a network device sends first information to a terminal device, the first information is used for determining whether a respective terminal device corresponding to each of a first terminal type and a second terminal type is allowed to access a cell corresponding to the network device or barred from accessing the cell.

Accordingly, the terminal device receives the first information from the network device.

The terminal type includes at least a first terminal type and a second terminal type. The first terminal type and the second terminal type are two different terminal types. The first information is used for determining whether the terminal device corresponding to the first terminal type is allowed to access the cell corresponding to the network device or barred from accessing the cell, and also used for determining whether the terminal device corresponding to the second terminal type is allowed to access the cell corresponding to the network device or barred from accessing the cell.

Optionally, the terminal type is determined based on the capability possessed by the terminal devices, i.e. the terminal devices may be classified into different types according to the different capabilities possessed by different terminal devices. The terminal type is determined based on at least one of the TA pre-compensation capability and the positioning capability. Optionally, the TA pre-compensation capability refers to the capability of the terminal device to carry out TA pre-compensation using the positioning capability in combination with ephemeris information of a satellite and/or time information broadcast by system information. For example, the terminal device with the TA pre-compensation capability may estimate a TA corresponding to a service link between itself and a satellite, obtain a first TA in combination with information such as a common TA broadcast by the network, and use the first TA to carry out TA compensation to send msg1, which is a message for sending a preamble during a random access process. The positioning capability refers to a capability of the terminal device to obtain its own position information, such as Global Navigation Satellite System (GNSS) positioning capability.

In a case where the terminal type including at least the first terminal type and the second terminal type, the terminal device with the first terminal type has the TA pre-compensation capability, and the terminal device with the second terminal type have no TA pre-compensation capability. Alternatively, the terminal device with the first terminal type has the positioning capability, and the terminal device with the second terminal type has no positioning capability. In an embodiment, the terminal device with the first terminal type has the TA pre-compensation capability and the positioning capability, and the terminal device with the second terminal type has no TA pre-compensation capability or positioning capability or has neither the TA pre-compensation capability nor the positioning capability.

Optionally, the first information is used for explicitly or implicitly indicating the cell corresponding to the network device that the terminal device corresponding to each of the first terminal type and the second terminal type is allowed to access or barred from accessing. In an exemplary embodiment, the first information includes one of cell access barred indication information, random access resource configuration information, and UAC configuration information. Introductory of the above information is described with reference to the following embodiments.

In an exemplary embodiment, the network device sends the first information through system information. For example, the network device sends the system information, and the system information includes the first information. Accordingly, the terminal device receives the system information including the first information from the network device. Optionally, the network device broadcasts the system information, and the system information includes the first information.

In an example, the first information is contained in its entirety in an MIB. In some embodiments, considering that the MIB already has the cell access barred indication information (i.e. cellBarred information described above), the cell access barred indication information in the MIB may be reused for a certain terminal type (specifically reused for which terminal type may be agreed by a protocol or newly configured), and new cell access barred indication information may be added in the MIB for other terminal types. Taking the terminal types including the first terminal type and the second terminal type described above as an example, the original cell access barred indication information in the MIB may be reused for the first terminal type, i.e. whether the terminal device corresponding to the first terminal type is allowed to access the cell corresponding to the network device or barred from accessing the cell is determined based on the original cell access barred indication information in the MIB. New cell access barrd indication information added in the MIB (e.g. the remaining 1-bit reserved field in the MIB is used for the newly added cell access barred indication information) is for the second terminal type to use, i.e. whether the terminal device corresponding to the second terminal type is allowed to access the cell corresponding to the network device or barred from the cell is determined based on the newly added cell access barred indication information in the MIB. Alternatively, the original cell access barred indication information in the MIB may be reused for the second terminal type, i.e. whether the terminal device corresponding to the second terminal type is allowed to access the cell corresponding to the network device or barred from accessing the cell is determined based on the cell access barred indication information in the MIB. New cell access barred indication information added in the MIB (e.g. the remaining 1-bit reserved field in the MIB is used for the newly added cell access barred indication information) is for the first terminal type to use, i.e. whether the terminal device corresponding to the first terminal type is allowed to access the cell corresponding to the network device or barred from the cell is determined based on the newly added cell access barred indication information in the MIB.

In another example, the first information is contained in its entirety in a System Information Block (SIB). Optionally, the SIB may be SIB 1, SIB 2, or another SIB, which is not limited herein. Optionally, unused bits in the SIB are utilized to indicate respective cell access barred indication information corresponding to at least two terminal types (e.g. including a first terminal type and a second terminal type), respectively.

In another example, the first information is distributed in an MIB and at least one SIB, or the first information is distributed in multiple SIBs. The SIB may be SIB 1, SIB 2, or another SIB, which is not limited in the present disclosure. In some embodiments, considering that the MIB already has the cell access barred indication information (i.e. cellBarred information as described above), the cell access barred indication information in the MIB may be reused for a certain terminal type (specifically reused for which terminal type may be agreed by a protocol or newly configured), and new cell access barred indication information may be added in the SIB for other terminal types. Taking the terminal types including the first terminal type and the second terminal type described above as an example, the cell access barred indication information in the MIB may be reused for the first terminal type, i.e. whether the terminal device corresponding to the first terminal type is allowed to access the cell corresponding to the network device or barred from accessing the cell is determined based on the cell access barred indication information in the MIB. New cell access barred indication information added in the SIB (e.g. SIB 1, SIB 2, or another SIB) is for the second terminal type to use, i.e. whether the terminal device corresponding to the second terminal type is allowed to access the cell corresponding to the network device or barred from the cell is determined based on the cell access barred indication information in the SIB. Alternatively, the cell access barred indication information in the MIB may be reused for the second terminal type, i.e. whether the terminal device corresponding to the second terminal type is allowed to access the cell corresponding to the network device or barred from accessing the cell is determined based on the cell access barred indication information in the MIB. New cell access barred indication information added in the SIB (e.g. SIB 1, SIB 2, or another SIB) is for the first terminal type to use, i.e. whether the terminal device corresponding to the first terminal type is allowed to access the cell corresponding to the network device or barred from the cell is determined based on the cell access barred indication information in the SIB.

In operation 520, the terminal device determines whether the terminal device is allowed to access the cell corresponding to the network device or barred from accessing the cell according to first information from the network device and the terminal type of the terminal device.

In the following explanation, for simplicity of description, the "cell corresponding to the network device" is referred to as "cell".

Optionally, the terminal device accesses the cell or does not access the cell according to the determination that the terminal device is allowed to access the cell or barred from accessing the cell. For example, if the terminal device determines that it is allowed to access the cell, it accesses the cell; and if the terminal device determines that it is barred from accessing the cell, it does not access the cell.

Alternatively, a priority that the terminal device with the first terminal type accesses the cell is higher than a priority that the terminal device with the second terminal type accesses the cell. That is, in response to the terminal device being of the first terminal type, it is firstly determined whether the terminal device corresponding to the first terminal type is allowed to access the cell.

In an example, in response to the terminal device being of the first terminal type (e.g. the terminal device having the TA pre-compensation capability, or the terminal device having the positioning capability, or the terminal device having the TA pre-compensation capability and the positioning capability) and the first information indicating that the terminal device corresponding to the first terminal type (i.e., the terminal device being of the first terminal type) is allowed to access the cell, the terminal device determines that the it is allowed to access the cell. In response to the first information indicating that the terminal device corresponding to the first terminal type is barred from accessing the cell and the first information further indicating that the terminal device corresponding to the second terminal type (i.e., the terminal device being of the second terminal type) is allowed to access the cell, the terminal device determines that it is allowed to access the cell. In addition, in response to the first information indicating that the terminal device corresponding to the first terminal type is barred from accessing the cell and the first information further indicating that the terminal device corresponding to the second terminal type is barred from accessing the cell, the terminal device determines that the terminal device is barred from accessing the cell.

That is to say, in response to the terminal device being of the first terminal type, the terminal device firstly determines whether the terminal device corresponding to the first terminal type is allowed to access the cell or barred from accessing the cell based on the first information; and if the terminal device corresponding to the first terminal type is allowed to access the cell, the terminal device determines that the terminal device is allowed to access the cell. If the terminal device corresponding to the first terminal type is barred from accessing the cell, then the terminal device determines whether the terminal device corresponding to the second terminal type is allowed to access the cell or barred from accessing the cell based on the first information; and if the terminal device corresponding to the second terminal type is allowed to access the cell, the terminal device determines that the terminal device is allowed to access the cell. In addition, if the terminal device corresponding to the second terminal type is barred from accessing the cell, then the terminal device determines that the terminal device is barred from accessing the cell.

In another example, in response to the terminal device being of the first terminal type (e.g. the terminal device having the TA pre-compensation capability, or the terminal device having the positioning capability, or the terminal device having the TA pre-compensation capability and the positioning capability), and the first information indicating that at least one of the terminal device corresponding to the first terminal type or the terminal device corresponding to the second terminal type is allowed to access the cell, the terminal device determines that the terminal device is allowed to access the cell. In addition, if the first information indicates that the terminal device corresponding to the first terminal type and the terminal device corresponding to the second terminal type are barred from accessing the cell, then the terminal device determines that the terminal device is barred from accessing the cell.

That is to say, in response to the terminal device being of the first terminal type, the terminal device determines, based on the first information, whether the terminal device corresponding to the first terminal type is allowed to access the cell or barred from accessing the cell and whether the terminal device corresponding to the second terminal type is allowed to access the cell or barred from accessing the cell; and if the terminal device corresponding to the first terminal type is allowed to access the cell, the terminal device determines that the terminal device is allowed to access the cell. Optionally, if the terminal device corresponding to the first terminal type is barred from accessing the cell and the terminal device corresponding to the second terminal type is allowed to access the cell, then the terminal device determines that the terminal device is allowed to access the cell. In addition, if the terminal device corresponding to the first terminal type is barred from accessing the cell and the terminal device corresponding to the second terminal type is barred from accessing the cell, then the terminal device determines that the terminal device is barred from accessing the cell.

The above two examples are equivalent solutions with some differences in the order of steps.

Optionally, in response to the terminal device being of the first terminal type, if the terminal device corresponding to the first terminal type is allowed to access the cell, the terminal device performs a random access by using a random access resource configured for the first terminal type; and if the terminal device corresponding to the first terminal type is barred from accessing the cell and the terminal device corresponding to the second terminal type is allowed to access the cell, the terminal device performs the random access by using a random access resource configured for the second terminal type.

In another example, in response to the terminal device being of the second terminal type (e.g. the terminal device having no TA pre-compensation capability, or the terminal device having no positioning capability, or the terminal device having no TA pre-compensation capability and/or positioning capability) and the first information indicating that the terminal device corresponding to the second terminal type is allowed to access the cell, the terminal device determines that the terminal device is allowed to access the cell. In addition, if the first information indicates that the terminal device corresponding to the second terminal type is barred from accessing the cell, then the terminal device determines that the terminal device is barred from accessing the cell.

That is to say, in response to the terminal device being of the second terminal type, the terminal device determines whether the terminal device corresponding to the second terminal type is barred from accessing the cell or allowed to access the cell based on the first information; if the terminal device corresponding to the second terminal type is allowed to access the cell, the terminal device determines that it is allowed to access the cell; and if the terminal device corresponding to the second terminal type is barred from accessing the cell, then the terminal device determines that it is barred from accessing the cell.

Optionally, in response to the terminal device being of the second terminal type and the terminal device corresponding to the second terminal type being allowed to access the cell, the terminal device performs the random access by using the random access resource configured for the second terminal type.

It should be noted that since there are multiple random access resources (such as RO described above), the multiple random access resources may occupy different time-frequency domain positions. When the terminal device selects the random access resource for random access, it may select one random access resource from the multiple random access resources, for example, it may select one RO, from multiple ROs, to send a preamble. Different terminal devices may select different random access resources to initiate random access, for example, they may select different ROs to send the preamble. Thus, even if a terminal device with the first terminal type performs a random access by using a random access resource corresponding to the second terminal type according to the exemplary solution described above, generally, both the terminal device corresponding to the first terminal type and the terminal device corresponding to the second terminal type may initiate the random access, for example, the terminal device corresponding to the first terminal type and the terminal device corresponding to the second terminal type send the preamble at different ROs. Optionally, in some cases, the terminal device corresponding to the first terminal type may be firstly accessed if there are not multiple random access resources for selection. For example, when the terminal device corresponding to the first terminal type and the terminal device corresponding to the second terminal type need to use the same RO to send the preamble, the terminal device corresponding to the first terminal type may firstly use this RO to send the preamble, ensuring that the terminal device corresponding to the first terminal type is firstly accessed. Of course, in some other embodiments, a terminal device corresponding to the second terminal type may be firstly accessed if there are not multiple random access resources for selection, which is not limited by the present disclosure.

In the present disclosure, a terminal device determines whether the terminal device is allowed to access a cell corresponding to a network device or barred from accessing the cell according to first information from the network device (the first information is for determining whether a respective terminal device corresponding to each of the first terminal type and the second terminal type is allowed to access the cell corresponding to the network device or barred from accessing the cell) and a terminal type of the terminal device. Therefore, cell access by terminal devices with different types can be controlled separately and more flexibly, and network resources can be better utilized.

In addition, in some embodiments, in response to the terminal device being of the first terminal type (the terminal device having the TA pre-compensation capability and the positioning capability), the terminal device firstly determines whether the terminal device corresponding to the first terminal type is allowed to access the cell corresponding to the network device. Further, if it is determined that the terminal device corresponding to the first terminal type is barred from accessing the cell corresponding to the network device, the terminal device further determines whether the terminal device corresponding to the second terminal type is allowed to access the cell corresponding to the network device. Through two-step determination, the terminal device can be ensured to access the network using TA pre-compensation capability more greatly, so as to ensure the RACH capacity, and the terminal device may access the network without using the TA pre-compensation capability when the network is congested, thereby increasing the opportunity of successful access and improving the access success rate.

In an exemplary embodiment, the first information includes cell access barred indication information, which indicates whether the access is allowed or barred. Optionally, the cell access barred indication information may be cell barred information cellBarred for explicitly indicating whether a cell corresponding to the network device is allowed to reside or barred from residing. For example, when the cellBarred information indicates Barred, the access is barred, and when the cellBarred information indicates NotBarred, the access is allowed.

Optionally, for each of the first terminal type and the second terminal type, when the cell access barred indication information corresponding to the terminal type is the first indication information, it is indicated that the terminal device corresponding to the terminal type is allowed to access the cell, for example, it is indicated that the terminal device corresponding to the terminal type is allowed to reside in the cell; or, when the cell access barred indication information corresponding to the terminal type is the second indication information, it is indicated that the terminal device corresponding to the terminal type is barred from accessing the cell, for example, it is indicated that the terminal device corresponding to the terminal type is barred from residing in the cell. Here, the first indication information is different from the second indication information, for example, the first indication information is 0 and the second indication information is 1, or the first indication information is 1 and the second indication information is 0.

Taking the cellBarred information as an example, the cellBarred information may be implemented in bits. For example, the cellBarred information is represented by 1 bit, e.g. 0 or 1. For example, 0 represents Barred, which means that the access is allowed, and 1 represents NotBarred, which means that the access is barred. Alternatively, 1 represents Barred, which means that the access is allowed, and 0 represents NotBarred, which means that the access is barred.

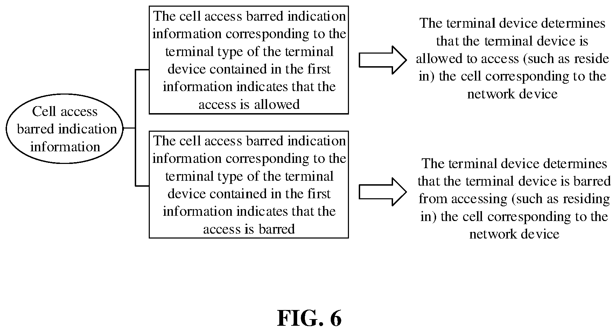

In an example, in response to the first information including the cell access barred indication information, the terminal device determines whether the terminal device is allowed to access the cell corresponding to the network device or barred from accessing the cell according to the cell access barred indication information corresponding to the terminal type of the terminal device. For example, as illustrated in FIG. 6, if the cell access barred indication information, contained in the first information, corresponding to the terminal type of the terminal device indicates that the access is allowed, then the terminal device determines that the terminal device is allowed to access (such as reside in) the cell corresponding to the network device; or, if the cell access barred indication information corresponding to the terminal type of the terminal device contained in the first information indicates that the access is barred, then the terminal device determines that the terminal device is barred from accessing (such as residing in) the cell corresponding to the network device. Exemplarily, it is assumed that the cell access barred indication information corresponding to the first terminal type indicates that the access is allowed, and the cell access barred indication information corresponding to the second terminal type indicates that the access is barred, if the terminal device is of the first terminal type, then the terminal device determines that the terminal device is allowed to access (such as reside in) the cell corresponding to the network device; and if the terminal device is of the second terminal type, then the terminal device determines that the terminal device is barred from accessing (such as residing in) the cell corresponding to the network device.

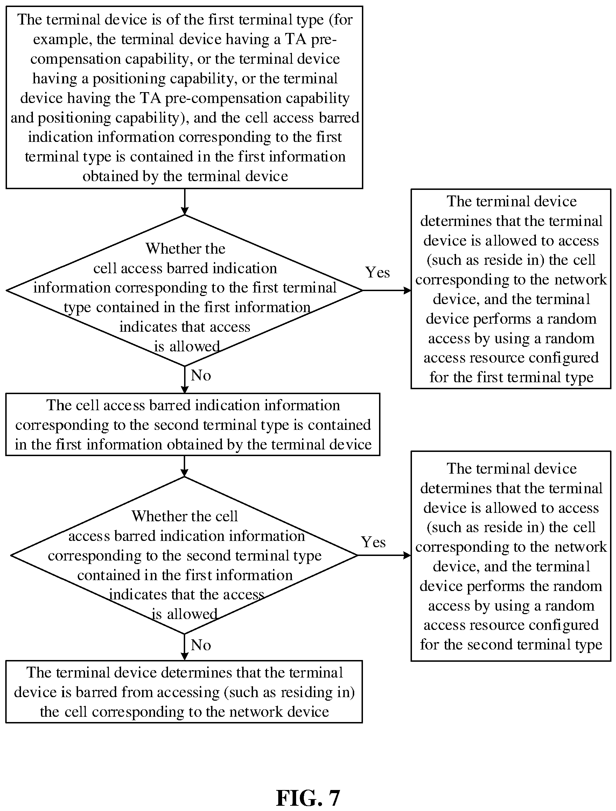

In another example, as illustrated in FIG. 7, in a case where the terminal device is of the first terminal type (for example, the terminal device having the TA pre-compensation capability, or the terminal device having the positioning capability, or the terminal device having the TA pre-compensation capability and the positioning capability), if the cell access barred indication information corresponding to the first terminal type contained in the first information indicates that the access is allowed, then the terminal device determines that the terminal device is allowed to access (such as reside in) the cell corresponding to the network device; or, if the cell access barred indication information corresponding to the first terminal type contained in the first information indicates that the access is barred and the cell access barred indication information corresponding to the second terminal type contained in the first information indicates that the access is allowed, then the terminal device determines that the terminal device is allowed to access (such as reside in) the cell corresponding to the network device; or, if the cell access barred indication information corresponding to the first terminal type contained in the first information indicates that the access is barred and the cell access barred indication information corresponding to the second terminal type contained in the first information indicates that the access is barred, then the terminal device determines that the terminal device is barred from accessing (such as residing in) the cell corresponding to the network device.

In another example, in a case where the terminal device is of the first terminal type (for example, the terminal device having the TA pre-compensation capability, or the terminal device having the positioning capability, or the terminal device having the TA pre-compensation capability and the positioning capability), if the cell access barred indication information corresponding to the first terminal type contained in the first information indicates that the access is allowed or the cell access barred indication information corresponding to the second terminal type contained in the first information indicates that the access is allowed, then the terminal device determines that the terminal device is allowed to access (such as reside in) the cell corresponding to the network device; or, if the cell access barred indication information corresponding to the first terminal type contained in the first information indicates that the access is barred and the cell access barred indication information corresponding to the second terminal type contained in the first information indicates that the access is barred, then the terminal device determines that the terminal device is barred from accessing (such as residing in) the cell corresponding to the network device.

Optionally, in a case where the terminal device is of the first terminal type, if the terminal device with the first terminal type is allowed to access the cell corresponding to the network device, then the terminal device performs a random access by using the random access resource configured for the first terminal type; or, if the terminal device with the first terminal type is barred from accessing the cell corresponding to the network device and the terminal device with the second terminal type is allowed to access the cell, then the terminal device performs the random access by using the random access resource configured for the second terminal type.

In another example, in a case where the terminal device is of the second terminal type (for example, the terminal device having no TA pre-compensation capability, or the terminal device having no positioning capability, or the terminal device having no TA pre-compensation capability and/or positioning capability), if the cell access barred indication information corresponding to the second terminal type contained in the first information indicates that the access is allowed, then the terminal device determines that the terminal device is allowed to access (such as reside in) the cell corresponding to the network device; or, if the cell access barred indication information corresponding to the second terminal type contained in the first information indicates that the access is barred, then the terminal device determines that the terminal device is barred from accessing (such as residing in) the cell corresponding to the network device.

Optionally, in response to the terminal device being of the second terminal type and the terminal device with the second terminal type being allowed to access the cell corresponding to the network device, then the terminal device performs the random access by using the random access resource configured for the second terminal type.

In an exemplary embodiment, in response to determining that the terminal device is barred from accessing the cell corresponding to the network device, the terminal device determines whether it is allowed to select or reselect another intra-frequency cell of the cell corresponding to the network device for access according to the intra frequency reselection indication information corresponding to the terminal type of the terminal device. Here, the intra-frequency cell refers to the cell with the same frequency of the cell. For example, the intra frequency reselection indication information may be intraFreqReselection, which indicates whether the terminal device is allowed to select or reselect the suboptimal cell with the current frequency in response to the current cell being the optimal cell with the current frequency and the terminal device being not allowed to reside in the current cell.

Optionally, the first information also includes the respective intra frequency reselection indication information corresponding to each of the at least two terminal types. For example, in response to the at least two terminal types including the first terminal type and the second terminal type, the first information includes, in addition to the cell access barred indication information corresponding to the first terminal type and the cell access barred indication information corresponding to the second terminal type, the intra frequency reselection indication information corresponding to the first terminal type and the intra frequency reselection indication information corresponding to the second terminal type.

In the present disclosure, each cell access barred indication information is configured for a respective one of different terminal types, and it is explicitly indicated the access is allowed or barred through the cell access barred indication information, cell access by terminal devices with different types can be controlled separately.

In addition, in some embodiments, in response to the terminal device being of the first terminal type (the terminal device having the TA pre-compensation capability and the positioning capability), the terminal device firstly determines whether the terminal device is allowed to access the cell corresponding to the network device based on the cell access barred indication information corresponding to the first terminal type. Further, if it is determined that the terminal device with the first terminal type is barred from accessing the cell corresponding to the network device, the terminal device further determines whether the terminal device is allowed to access the cell corresponding to the network device based on the cell access barred indication information corresponding to the second terminal type. Through the two-step determination, the terminal device can be ensured to access the network using TA pre-compensation capability more greatly, so as to ensure the RACH capacity, and the terminal device may access the network without using the TA pre-compensation capability when the network is congested, thereby increasing the opportunity of successful access and improving the access success rate.

In an exemplary embodiment, the first information includes random access resource configuration information, which indicates that the access is allowed or barred. Optionally, the random access resource configuration information implicitly indicates that the access is allowed or barred. The random access resource configuration information is information for configuring a random access resource (such as an RO), in some embodiments, it may be utilized to implicitly indicate that the access is allowed or barred.

Optionally, for each of the first terminal type and the second terminal type, the fact that the random access resource configuration information corresponding to a terminal type is contained in the first information indicates that the terminal device corresponding to the terminal type is allowed to access the cell; or the fact that the random access resource configuration information corresponding to a terminal type is not contained in the first information indicates that the terminal device corresponding to the terminal type is barred from accessing the cell.

Optionally, a fact that the random access resource configuration information is associated with the first terminal type indicates that the terminal device corresponding to the first terminal type is allowed to access the cell; and/or a fact that the random access resource configuration information is associated with the second terminal type indicates that the terminal device corresponding to the first terminal type is allowed to access the cell.

In other words, the situation that the random access resource configuration information corresponding to the first terminal type is contained in the first information, and/or, the random access resource configuration information corresponding to the second terminal type is contained in the first information, indicates that the terminal device corresponding to the first terminal type is allowed to access the cell. The situation that the random access resource configuration information corresponding to the first terminal type is not contained in the first information and the random access resource configuration information corresponding to the second terminal type is not contained in the first information, indicates that the terminal device corresponding to the first terminal type is barred from accessing the cell and the terminal device corresponding to the second terminal type is barred from accessing the cell. The situation that the random access resource configuration information corresponding to the first terminal type is contained in the first information yet the random access resource configuration information corresponding to the second terminal type is not contained in the first information, indicates that the terminal device corresponding to the second terminal type is barred from accessing the cell.

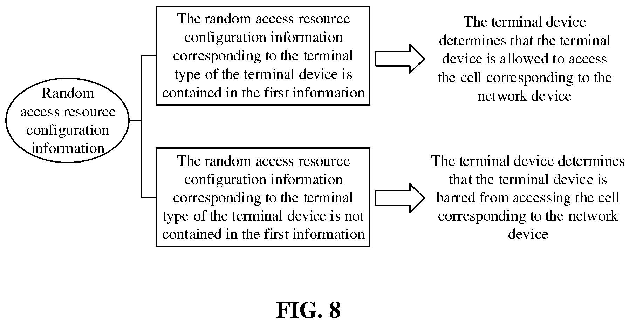

In an example, in a case where the first information includes the random access resource configuration information, the terminal device determines whether the terminal device is allowed to access the cell corresponding to the network device or barred from accessing the cell according to the situation whether the random access resource configuration information corresponding to the terminal type of the terminal device is contained in the first information. For example, as illustrated in FIG. 8, if the random access resource configuration information corresponding to the terminal type of the terminal device is contained in the first information, then the terminal device determines that the terminal device is allowed to access the cell corresponding to the network device; or, if the random access resource configuration information corresponding to the terminal type of the terminal device is not contained in the first information, then the terminal device determines that the terminal device is barred from accessing the cell corresponding to the network device. Exemplarily, if the random access resource configuration information corresponding to the first terminal type is contained in the first information, the random access resource configuration information corresponding to the second terminal type is not contained in the first information, and the terminal device is of the first terminal type, then the terminal device determines that the terminal device is allowed to access the cell corresponding to the network device; and if the terminal device is of the second terminal type, then the terminal device determines that the terminal device is barred from accessing the cell corresponding to the network device.

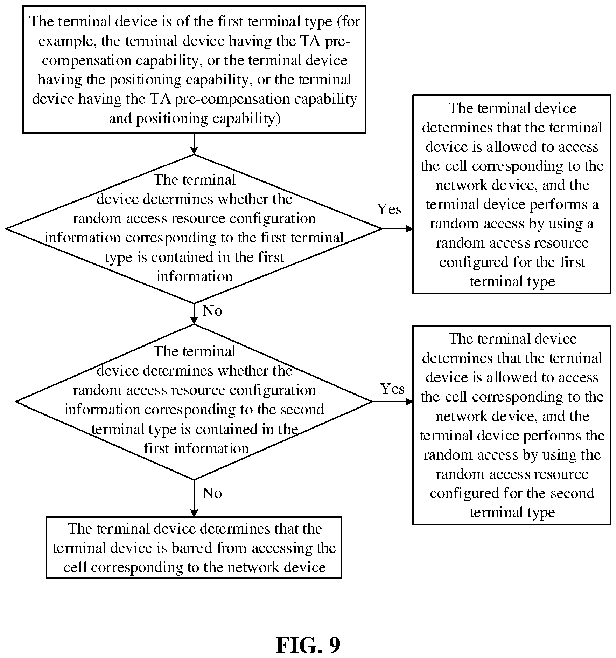

In another example, as illustrated in FIG. 9, in a case that the terminal device is of the first terminal type (for example, the terminal device having the TA pre-compensation capability, or the terminal device having the positioning capability, or the terminal device having the TA pre-compensation capability and the positioning capability): if the random access resource configuration information corresponding to the first terminal type is contained in the first information, the terminal device determines that the terminal device is allowed to access the cell corresponding to the network device; or, if the random access resource configuration information corresponding to the first terminal type is not contained in the first information and the random access resource configuration information corresponding to the second terminal type is contained in the first information, the terminal device determines that the terminal device is allowed to access the cell corresponding to the network device; or, if the random access resource configuration information corresponding to the first terminal type is not contained in the first information and the random access resource configuration information corresponding to the second terminal type is not contained in the first information, the terminal device determines that the terminal device is barred from accessing the cell corresponding to the network device.

In another example, in a case where the terminal device is of the first terminal type (for example, the terminal device having the TA pre-compensation capability, or the terminal device having the positioning capability, or the terminal device having the TA pre-compensation capability and the positioning capability): if the random access resource configuration information corresponding to the first terminal type is contained in the first information, or the random access resource configuration information corresponding to the second terminal type is contained in the first information, the terminal device determines that the terminal device is allowed to access the cell corresponding to the network device; or, if the random access resource configuration information corresponding to the first terminal type is not contained in the first information and the random access resource configuration information corresponding to the second terminal type is not contained in the first information, the terminal device determines that the terminal device is barred from accessing the cell corresponding to the network device.

Optionally, in a case where the terminal device is of the first terminal type, if the terminal device with the first terminal type is allowed to access the cell corresponding to the network device, the terminal device performs a random access by using the random access resource configured for the first terminal type; or, if the terminal device with the first terminal type is barred from accessing the cell corresponding to the network device and the terminal device with the second terminal type is allowed to access the cell, then the terminal device performs the random access by using the random access resource configured for the second terminal type.

In another example, in a case where the terminal device is of the second terminal type (for example, the terminal device having no TA pre-compensation capability, or the terminal device having no positioning capability, or the terminal device having no TA pre-compensation capability and/or positioning capability), if the random access resource configuration information corresponding to the second terminal type is contained in the first information, then the terminal device determines that the terminal device is allowed to access the cell corresponding to the network device; or, if the random access resource configuration information corresponding to the second terminal type is not contained in the first information, then the terminal device determines that the terminal device is barred from accessing the cell corresponding to the network device.

Optionally, in response to the terminal device being of the second terminal type and the terminal device with the second terminal type being allowed to access the cell corresponding to the network device, then the terminal device performs the random access by using the random access resource configured for the second terminal type.

In the present disclosure, each random access resource configuration information is configured/not configured for a respective one of different terminal types, and it is implicitly indicated the access is allowed or barred through the random access resource configuration information, cell access by terminal devices with different types can be controlled separately.

In addition, in some embodiments, in response to the terminal device being of the first terminal type (the terminal device having the TA pre-compensation capability and the positioning capability), the terminal device firstly determines whether the terminal device is allowed to access the cell corresponding to the network device based on the situation whether the random access resource configuration information corresponding to the first terminal type is contained in the first information. Further, if it is determined that the first terminal type is barred from accessing the cell corresponding to the network device, the terminal device further determines whether the terminal device is allowed to access the cell corresponding to the network device based on the situation whether the random access resource configuration information corresponding to the second terminal type is contained in the first information. Through the two-step determination, the terminal device can be ensured to access the network using the TA pre-compensation capability more greatly, so as to ensure the RACH capacity, and the terminal device may access the network without using the TA pre-compensation capability when the network is congested, thereby increasing the opportunity of successful access and improving the access success rate.

In an exemplary embodiment, the first information includes UAC configuration information, and the UAC configuration information is used for the terminal device to determine whether the terminal device is allowed to access the cell or barred from accessing the cell according to a UAC check result.

Optionally, the UAC configuration information includes at least one of: UAC-BarringInfoSetIndex corresponding to each access category, uac-BarringFactor corresponding to each access category, uac-BarringTime corresponding to each access category, and uac-BarringForAccessIdentity corresponding to each access category. The introduction and explanation of the above respective parameters may also be referred to above, which will not be elaborated herein again.

Optionally, for each of the first terminal type and the second terminal type, in response to a UAC check performed based on the UAC configuration information corresponding to a terminal type being successful, it is determined that the terminal device with the terminal type is allowed to access the cell; or in response to the UAC check performed based on the UAC configuration information corresponding to a terminal type being unsuccessful, it is determined that the terminal device with the terminal type is barred from accessing the cell.

Optionally, in response to the UAC check performed based on the UAC configuration information corresponding to the first terminal type being successful, it is determined that the terminal device corresponding to the first terminal type is allowed to access the cell; and/or in response to the UAC check performed based on the UAC configuration information corresponding to the second terminal type being successful, it is determined that the terminal device corresponding to the first terminal type is allowed to access the cell. In response to the UAC check performed based on the UAC configuration information corresponding to the first terminal type being unsuccessful and the UAC check performed based on the UAC configuration information corresponding to the second terminal type being unsuccessful, it is determined that the terminal device corresponding to the first terminal type is barred from accessing the cell. In addition, in response to the UAC check performed based on the UAC configuration information corresponding to the second terminal type being successful, it is determined that the terminal device corresponding to the second terminal type is allowed to access the cell; or, in response to the UAC check performed based on the UAC configuration information corresponding to the second terminal type being unsuccessful, it is determined that the terminal device corresponding to the second terminal type is barred from accessing the cell.

Optionally, the UAC configuration information corresponding to the first terminal type and the UAC configuration information corresponding to the second terminal type may be the same or different. In response to the terminal device being of the first terminal type, the terminal device performs the UAC check based on the UAC configuration information corresponding to the first terminal type. In response to the terminal device being of the second terminal type, the terminal device performs the UAC check based on the UAC configuration information corresponding to the second terminal type. In addition, the above UAC check process may be performed as follows.
In S1: the premise is that neither timer T390 nor T302 operates and the access category is not 0; then determination is performed according to UAC configuration information, and the process proceeds to S2;
In S2: if the bit in the uac-BarringForAccessIdentity corresponding to the access identity in the uac-BarringForAccessIdentity is set to 0, the access is allowed, if the corresponding bit is set to 1, further determination is needed, and the process proceeds to S3; and
In S3: a random number 0 ≤ rand < 1 is generated. If the random number rand is less than uac-BarringFactor, the access is allowed, otherwise, the access is barred. If the access is barred, a random number 0 ≤ rand < 1 is generated, and T390 is started, where T390 = (0.7 + 0.6 * rand) * uac-BarringTime.

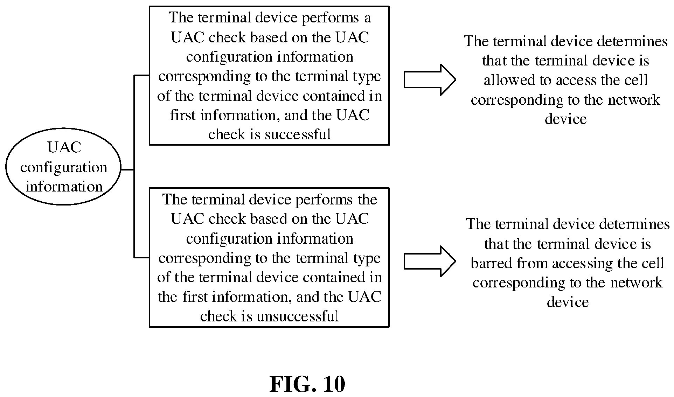

In an example, in response to the first information including the UAC configuration information, the terminal device performs the UAC check according to the UAC configuration information corresponding to the terminal type of the terminal device, and determines whether the terminal device is allowed to access the cell corresponding to the network device or barred from accessing the cell based on the UAC check result. For example, as illustrated in FIG. 10, the terminal device performs the UAC check based on the UAC configuration information, contained in the first information, corresponding to the terminal type of the terminal device; if the UAC check is successful, then the terminal device determines that the terminal device is allowed to access the cell corresponding to the network device; or, if the UAC check is unsuccessful, then the terminal device determines that the terminal device is barred from accessing the cell corresponding to the network device. Exemplarily, when the UAC configuration information corresponding to the first terminal type and the UAC configuration information corresponding to the second terminal type are contained in the first information, if the terminal device is of the first terminal type, then the terminal device performs the UAC check based on the UAC configuration information corresponding to the first terminal type, and determines that the terminal device is allowed to access the cell corresponding to the network device in response to the UAC check being successful and that the terminal device is barred from accessing the cell corresponding to the network device in response to the UAC check being unsuccessful; and if the terminal device is the second terminal type, then the terminal device performs the UAC check based on the UAC configuration information corresponding to the second terminal type, and determines that the terminal device is allowed to access the cell corresponding to the network device in response to the UAC check being successful and that the terminal device is barred from accessing the cell corresponding to the network device in response to the UAC check being unsuccessful.

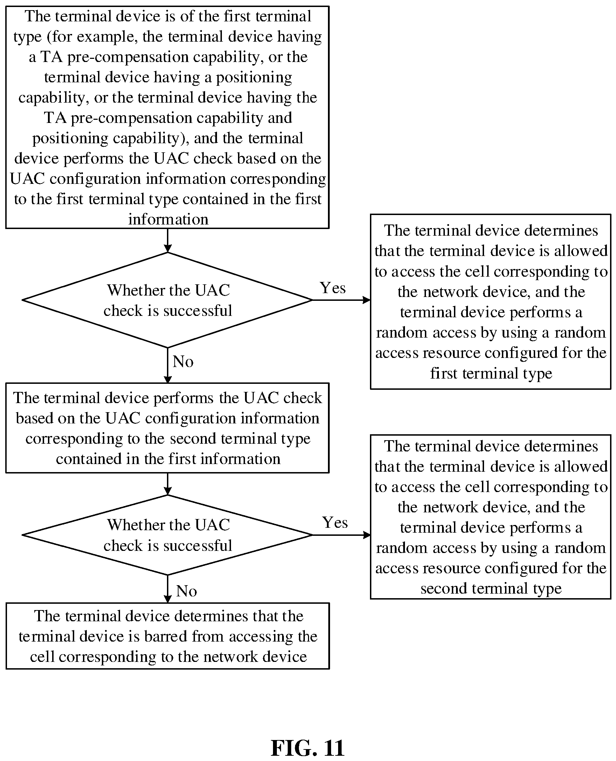

In another example, as illustrated in FIG. 11, in a case where the terminal device is of the first terminal type (for example, the terminal device having the TA pre-compensation capability, or the terminal device having the positioning capability, or the terminal device having the TA pre-compensation capability and the positioning capability), if the UAC check performed based on the UAC configuration information corresponding to the first terminal type contained in the first information being successful, then the terminal device determines that the terminal device is allowed to access the cell corresponding to the network device; or, if the UAC check performed based on the UAC configuration information corresponding to the first terminal type contained in the first information being unsuccessful and the UAC check performed based on the UAC configuration information corresponding to the second terminal type contained in the first information being successful, then the terminal device determines that the terminal device is allowed to access the cell corresponding to the network device; or, if the UAC check performed based on the UAC configuration information corresponding to the first terminal type contained in the first information being unsuccessful and the UAC check performed based on the UAC configuration information corresponding to the second terminal type contained in the first information being unsuccessful, then the terminal device determines that the terminal device is barred from accessing the cell corresponding to the network device.

In another example, in a case where the terminal device is of the first terminal type (for example, the terminal device having the TA pre-compensation capability, or the terminal device having the positioning capability, or the terminal device having the TA pre-compensation capability and the positioning capability), if the UAC check performed based on the UAC configuration information corresponding to the first terminal type contained in the first information being successful or the UAC check performed based on the UAC configuration information corresponding to the second terminal type contained in the first information being successful, then the terminal device determines that the terminal device is allowed to access the cell corresponding to the network device; or, if the UAC check performed based on the UAC configuration information corresponding to the first terminal type contained in the first information being unsuccessful and the UAC check performed based on the UAC configuration information corresponding to the first terminal type contained in the first information being unsuccessful, then the terminal device determines that the terminal device is barred from accessing the cell corresponding to the network device.

Optionally, in a case where the terminal device is of the first terminal type, if the terminal device with the first terminal type is allowed to access the cell corresponding to the network device, then the terminal device performs a random access by using the random access resource configured for the first terminal type; or, if the terminal device with the first terminal type is barred from accessing the cell corresponding to the network device and the terminal device with the second terminal type is allowed to access the cell, then the terminal device performs the random access by using the random access resource configured for the second terminal type.

In another example, in response to the terminal device being of the second terminal type (for example, the terminal device having no TA pre-compensation capability, or the terminal device having no positioning capability, or the terminal device having no TA pre-compensation capability and/or positioning capability), the terminal device performs the UAC check based on the UAC configuration information corresponding to the second terminal type contained in the first information, if the UAC check is successful, then it is determined that the terminal device is allowed to access the cell corresponding to the network device, and if the UAC check is unsuccessful, then it is determined that the terminal device is barred from accessing the cell corresponding to the network device.

Optionally, in response to the terminal device being of the second terminal type and the second terminal type being allowed to access the cell corresponding to the network device, then the terminal device performs the random access by using the random access resource configured for the second terminal type.

In the present disclosure, each UAC configuration information is configured for a respective one of different terminal types, and it is determined whether the access is allowed or barred based on the UAC check performed based on the UAC configuration information, cell access by terminal devices with different types can be controlled separately.

In addition, in some embodiments, in response to the terminal device being of the first terminal type (the terminal device having the TA pre-compensation capability and the positioning capability), the terminal device firstly determines whether the terminal device is allowed to access the cell corresponding to the network device based on the UAC configuration information corresponding to the first terminal type. Further, if it is determined that the terminal device with the first terminal type is barred from accessing the cell corresponding to the network device, the terminal device further determines whether the terminal device is allowed to access the cell corresponding to the network device based on the UAC configuration information corresponding to the second terminal type. Through the two-step determination, the terminal device can be ensured to access the network using TA pre-compensation capability more greatly, so as to ensure the RACH capacity, and the terminal device may access the network without using the TA pre-compensation capability when the network is congested, thereby increasing the opportunity of successful access and improving the access success rate.

In some embodiments, in response to the first information including the cell access barred indication information (e.g. cellBarred information) or the UAC configuration information, the network device may also configure the random access resource configuration information for the terminal device. Optionally, the random access resource configuration information may be used for configuring the random access resource corresponding to the first terminal type and/or the random access resource corresponding to the second terminal type, so that the terminal device initiates the random access by using the random access resource corresponding to a certain terminal type.

It should be noted that in the above method embodiments, the technical solution of the present disclosure is introduced and explained only from the perspective of interaction between the terminal device and the network device. The steps performed by the terminal device may be individually implemented as a method for controlling cell access on the terminal device side, and the steps performed by the network device may be individually implemented as a method for controlling cell access on the network device side.

The following describes apparatus embodiments of the present disclosure, which may be used to perform embodiments of the method of the present disclosure. For details not disclosed in the apparatus embodiment of the present disclosure, please refer to the method embodiments of the present disclosure.

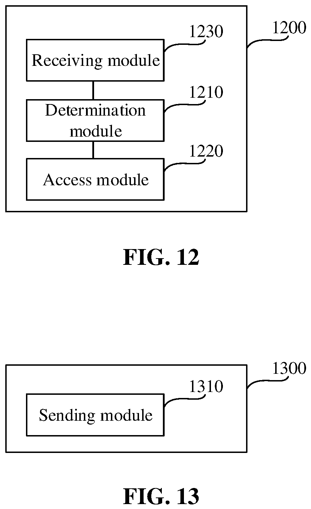

Referring to FIG. 12, it is illustrated a block diagram of an apparatus for controlling cell access provided by an embodiment of the present disclosure. The apparatus has functions of implementing the above method examples, the functions may be implemented by hardware or by hardware executing corresponding software. The apparatus may be the terminal device involved above, or may be arranged in the terminal device. As illustrated in FIG. 12, the apparatus 1200 includes a determination module 1210.

The determination module 1210 is configured to determine whether the terminal device is allowed to access a cell corresponding to a network device or barred from accessing the cell according to first information from the network device and a terminal type of the terminal device;

Here, the terminal type includes at least a first terminal type and a second terminal type, and the first information is used for determining whether a respective terminal device corresponding to each of the first terminal type and the second terminal type is allowed to access the cell or barred from accessing the cell.

In an exemplary embodiment, as illustrated in FIG. 12, the apparatus 1200 may include an access module 1220.

The access module 1220 is configured to access or not access the cell according to the determination that the terminal device is allowed to access the cell or barred from accessing the cell.

In an embodiment, the determination module 1210 is configured to, in response to the terminal device being of the first terminal type and the first information indicating that the terminal device corresponding to the first terminal type is allowed to access the cell, determine that the terminal device is allowed to access the cell. Optionally, the access module 1220 is configured to perform a random access by using a random access resource configured for the first terminal type.

In an embodiment, the determination module 1210 is further configured to, in response to the first information indicating that the terminal device corresponding to the first terminal type is barred from accessing the cell and the first information further indicating that the terminal device corresponding to the second terminal type is allowed to access the cell, determine that the terminal device is allowed to access the cell. Optionally, the access module 1220 is configured to perform a random access by using a random access resource configured for the second terminal type.

In an exemplary embodiment, the determination module 1210 is further configured to, in response to the first information indicating that the terminal device corresponding to the first terminal type is barred from accessing the cell and the first information further indicating that the terminal device corresponding to the second terminal type is barred from accessing the cell, determine that the terminal device is barred from accessing the cell.

In an exemplary embodiment, the determination module 1210 is configured to, in response to the terminal device being of the first terminal type and the first information indicating that at least one of the terminal device corresponding to the first terminal type or the terminal device corresponding to the second terminal type is allowed to access the cell, determine that the terminal device is allowed to access the cell.

Optionally, the access module 1220 is configured to, in response to the first information indicating that the terminal device corresponding to the first terminal type and the terminal device corresponding to the second terminal type are allowed to access the cell, or, the first information indicating that the terminal device corresponding to the first terminal type is allowed to access the cell and the terminal device corresponding to the second terminal type is barred from accessing the cell, perform a random access by using a random access resource configured for the first terminal type; or, in response to the first information indicating that the terminal device corresponding to the second terminal type is allowed to access the cell and the terminal device corresponding to the first terminal type is barred from accessing the cell, perform a random access by using a random access resource configured for the second terminal type.

In an exemplary embodiment, the determination module 1210 is configured to, in response to the terminal device being of the first terminal type and the first information indicating that the terminal device corresponding to the first terminal type and the terminal device corresponding to the second terminal type are barred from accessing the cell, determine that the terminal device is barred from accessing the cell.

In an exemplary embodiment, the determination module 1210 is configured to, in response to the terminal device being of the second terminal type and the first information indicating that the terminal device corresponding to the second terminal type is allowed to access the cell, determine that the terminal device is allowed to access the cell. Optionally, the access module 1220 is used to perform a random access by using a random access resource configured for the second terminal type.

In an exemplary embodiment, the determination module 1210 is configured to, in response to the first information indicating that the terminal device corresponding to the second terminal type is barred from accessing the cell, determine that the terminal device is barred from accessing the cell.

In an embodiment, the terminal type is determined based on at least one of the following capabilities: a TA pre-compensation capability or a GNSS positioning capability.

Optionally, the first terminal type has a TA pre-compensation capability and the second terminal type has no TA pre-compensation capability; or, the first terminal type has a GNSS positioning capability, and the second terminal type has no GNSS positioning capability. In an embodiment, the first terminal type has the TA pre-compensation capability and GNSS positioning capability, and the second terminal type has no TA pre-compensation capability or GNSS positioning capability or has neither the TA pre-compensation capability nor the GNSS positioning capability.

In an exemplary embodiment, the first information includes cellBarred information, the cellBarred information indicating Barred represents that the access is barred, and the cellBarred information indicating NotBarred represents that the access is allowed.

In an exemplary embodiment, the first information includes random access resource configuration information indicating that the access is allowed or barred.

Optionally, at least one of the following applies: a fact that the random access resource configuration information is associated with the first terminal type indicates that the terminal device corresponding to the first terminal type is allowed to access the cell; or a fact that the random access resource configuration information is associated with the second terminal type indicates that the terminal device corresponding to the first terminal type is allowed to access the cell.

In an exemplary embodiment, the first information includes UAC configuration information, and the UAC configuration information is used for the terminal device to determine whether the terminal device is allowed to access the cell or barred from accessing the cell according to a UAC check result.

Optionally, at least one of the following applies: in response to a UAC check performed based on the UAC configuration information corresponding to the first terminal type being successful, it is determined that the terminal device corresponding to the first terminal type is allowed to access the cell; or in response to a UAC check performed based on the UAC configuration information corresponding to the second terminal type being successful, it is determined that the terminal device corresponding to the first terminal type is allowed to access the cell.

In an exemplary embodiment, as illustrated in FIG. 12, the apparatus 1200 may include a receiving module 1230.

The receiving module 1230 is configured to receive the first information from the network device through system information.

Optionally, the first information is contained in its entirety in a MIB; or the first information is contained in its entirety in a SIB; or, the first information is distributed in an MIB and at least one SIB, or the first information is distributed in multiple SIBs.

Referring to FIG. 13, it is illustrated a block diagram of an apparatus for controlling cell access provided by an embodiment not being part of the present disclosure. The apparatus has functions of implementing the above method examples, the functions can be implemented by hardware or by hardware executing corresponding software. The apparatus may be the network device involved above, or may be arranged in the network device. As illustrated in FIG. 13, the apparatus 1300 may include a sending module 1310.

The sending module 1310 is configured to send first information, the first information enables a terminal device to determine whether the terminal device is allowed to access a cell corresponding to the network device or barred from accessing the cell according to the first information and a terminal type of the terminal device.

Here, the terminal type includes at least a first terminal type and a second terminal type, and the first information is used for determining whether a respective terminal device corresponding to each of the first terminal type and the second terminal type is allowed to access the cell or barred from accessing the cell.

It is accessed the cell or not accessed the cell by the terminal device according to the determination that the terminal device is allowed to access the cell or barred from accessing the cell.

The first information indicates that the terminal device corresponding to the first terminal type is allowed to access the cell and enables the terminal device with the first terminal type to determine that the terminal device is allowed to access the cell. Optionally, a random access resource configured for the first terminal type is used by the terminal device to perform a random access.

The first information indicates that the terminal device corresponding to the first terminal type is barred from accessing the cell and the first information further indicates that the terminal device corresponding to the second terminal type is allowed to access the cell, the first information enables the terminal device to determine that the terminal device is allowed to access the cell. Optionally, a random access resource configured for the second terminal type is used by the terminal device to perform a random access.

The first information indicates that the terminal device corresponding to the first terminal type is barred from accessing the cell and the first information further indicates that the terminal device corresponding to the second terminal type is barred from accessing the cell, the first information enables the terminal device to determine that the terminal device is barred from accessing the cell.

The first information indicates that at least one of the terminal device corresponding to the first terminal type or the terminal device corresponding to the second terminal type is allowed to access the cell and enables the terminal device with the first terminal type to determine that the terminal device is allowed to access the cell.

Optionally, the first information indicates that the terminal device corresponding to the first terminal type and the terminal device corresponding to the second terminal type are allowed to access the cell, or, the first information indicates that the terminal device corresponding to the first terminal type is allowed to access the cell and the terminal device corresponding to the second terminal type is barred from accessing the cell, a random access resource configured for the first terminal type is used by the terminal device to perform a random access; or, the first information indicates that the terminal device corresponding to the second terminal type is allowed to access the cell and the terminal device corresponding to the first terminal type is barred from accessing the cell, a random access resource configured for the second terminal type is used by the terminal device to perform a random access.

The first information indicates that the terminal device corresponding to the first terminal type and the terminal device corresponding to the second terminal type are barred from accessing the cell and enables the terminal device to determine that the terminal device is barred from accessing the cell in response to the terminal device being of the first terminal type.

The first information indicates that the terminal device corresponding to the second terminal type is allowed to access the cell and enables the terminal device with the second terminal type to determine that the terminal device is allowed to access the cell. Optionally, a random access resource configured for the second terminal type is used by the terminal device to perform a random access.

The first information indicates that the terminal device corresponding to the second terminal type is barred from accessing the cell and enables the terminal device to determine that the terminal device is barred from accessing the cell.

The terminal type is determined based on at least one of the following capabilities: a TA pre-compensation capability or a GNSS positioning capability.

The first terminal type has a TA pre-compensation capability and the second terminal type has no TA pre-compensation capability; or, the first terminal type has a GNSS positioning capability, and the second terminal type has no GNSS positioning capability; or, the first terminal type has a TA pre-compensation capability and a GNSS positioning capability, and the second terminal type has no TA pre-compensation capability or GNSS positioning capability or has neither the TA pre-compensation capability nor the GNSS positioning capability.

The first information includes cellBarred information, the cellBarred information indicating Barred represents that the access is barred, and the cellBarred information indicating NotBarred represents that the access is allowed.

The first information includes random access resource configuration information indicating that the access is allowed or barred.

Optionally, at least one of the following applies: a fact that the random access resource configuration information is associated with the first terminal type, indicates that the terminal device corresponding to the first terminal type is allowed to access the cell; or a fact that the random access resource configuration information is associated with the second terminal type indicates that the terminal device corresponding to the first terminal type is allowed to access the cell.

The first information includes UAC configuration information, and the UAC configuration information is used for the terminal device to determine whether the terminal device is allowed to access the cell or barred from accessing the cell according to a UAC check result.

Optionally, at least one of the following applies: in response to a UAC check performed based on the UAC configuration information corresponding to the first terminal type being successful, it is determined by the terminal device that the terminal device corresponding to the first terminal type is allowed to access the cell; or in response to a UAC check performed based on the UAC configuration information corresponding to the second terminal type being successful, it is determined by the terminal device that the terminal device corresponding to the first terminal type is allowed to access the cell.

The sending module 1310 is configured to send the first information through system information.

Optionally, the first information is contained in its entirety in a MIB; or the first information is contained in its entirety in a SIB; or, the first information is distributed in an MIB and at least one SIB, or the first information is distributed in multiple SIBs.

It should be noted that the apparatus provided above is explained by examples based solely on the division of each function module when implementing its functions. In practical application, the functions may be distributed into different function modules to implement according to actual needs, that is, the content structure of the device is divided into different function modules to complete all or part of the functions described above.

With regard to the apparatus in the above description, the specific manner for the respective modules to perform operations has been described in detail in the description relating to the method, which will not be explained in detail herein.

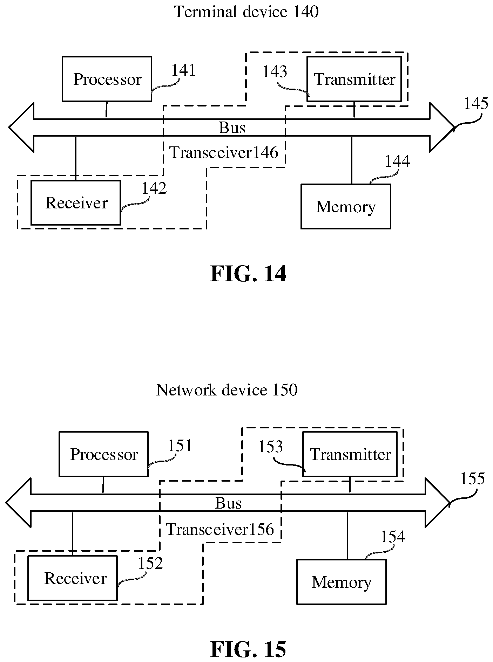

Referring to FIG. 14, it is illustrated a structural diagram of a terminal device 140, configured for the above method for controlling cell access, provided by the present disclosure. Specifically, the terminal device 140 may include: a processor 141, a receiver 142, a transmitter 143, a memory 144 and a bus 145.

The processor 141 includes one or more processing cores and executes various functional applications and information processing by running software programs and modules.

The receiver 142 and transmitter 143 may be implemented as a transceiver 146 which may be a communication chip.

The memory 144 is connected to the processor 141 through the bus 145.

The memory 144 may be configured to store a computer program, and the processor 141 is configured to execute the computer program to implement the various steps performed by the terminal device in the above method embodiments.

In addition, the memory 144 may be implemented by any type of volatile or non-volatile memory device or a combination thereof, the volatile or non-volatile memory device including but not limited to: a Random Access Memory (RAM) and a Read-Only Memory (ROM), an Erasable Programmable Read-Only Memory (EPROM), an Electrically Erasable Programmable Read-Only Memory (EEPROM), a flash memory or another solid-state memory technology, a Compact Disc Read-Only Memory (CD-ROM), a Digital Video Disc (DVD) or other optical memories, cassettes, magnetic tapes, magnetic disk memories or other magnetic memory devices.

The processor 141 is configured to determine whether the terminal device is allowed to access a cell corresponding to a network device or barred from accessing the cell according to first information from the network device and a terminal type of the terminal device.

Here, the terminal type includes at least a first terminal type and a second terminal type, and the first information is used for determining whether a respective terminal device corresponding to each of the first terminal type and the second terminal type is allowed to access the cell or barred from accessing the cell.

For details not described in detail in the present embodiment, referring to the introduction in the above embodiments, which will not be repeated herein.

Referring to FIG. 15, it is illustrated a structural diagram of a network device 150, for example, configured for the above method for controlling cell access, provided by an embodiment not being part of the present disclosure. Specifically, the network device 150 may include: a processor 151, a receiver 152, a transmitter 153, a memory 154 and a bus 155.

The processor 151 includes one or more processing cores and executes various functional applications and information processing by running software programs and modules.

The receiver 152 and transmitter 153 may be implemented as a transceiver 156 which may be a communication chip.

The memory 154 is connected to the processor 151 through the bus 155.

The memory 154 may be configured to store a computer program, and the processor 151 is configured to execute the computer program to implement the various steps performed by the network device in the above method embodiments.

In addition, the memory 154 may be implemented by any type of volatile or non-volatile memory device or a combination thereof, the volatile or non-volatile memory device including but not limited to: an RAM and an ROM, an EPROM, an EEPROM, a flash memory or another solid-state memory technology, a CD-ROM, a DVD or other optical memories, cassettes, magnetic tapes, magnetic disk memories or other magnetic memory devices.

The transceiver 156 is configured to send first information to a terminal device, the first information is used for the terminal device to determine whether the terminal device is allowed to access a cell corresponding to the network device or barred from accessing the cell according to the first information and a terminal type of the terminal device.

Here, the terminal type includes at least a first terminal type and a second terminal type, and the first information is used for determining whether a respective terminal device corresponding to each of the first terminal type and the second terminal type is allowed to access the cell or barred from accessing the cell.

For details not described in detail in the present embodiment, referring to the introduction in the above embodiments, which will not be repeated herein.

The present disclosure also provides a computer-readable storage medium having stored thereon a computer program which, when being executed by a processor of the terminal device, causes the processor to perform the method for controlling cell access of the above terminal device side.

The present disclosure also provides a computer-readable storage medium having stored thereon a computer program which, when being executed by a processor, causes the processor to perform method for controlling cell access of the above network device side.

Optionally, the computer-readable storage medium may include an ROM, an RAM, a Solid State Drives (SSD), an optical disk, or the like. Here, the random access memory may include a Resistive Random Access Memory (ReRAM) and a Dynamic Random Access Memory (DRAM).

The present disclosure also provides a chip, the chip includes at least one of a programmable logic circuitry or program instructions, and when the chip is operated by the terminal device, the at least one of programmable logic circuitry or program instructions implement the above method for controlling cell access of the terminal device side.

The present disclosure also provides a chip, the chip includes at least one of programmable logic circuitry or program instructions, and when the chip is operated by the network device, the at least one of programmable logic circuitry or program instructions implement the above method for controlling cell access of the network device side.

The present disclosure also provides a computer program product or a computer program including computer instructions stored in a computer-readable storage medium from which a processor of the terminal device reads and executes the computer instructions to perform the above method for controlling cell access of the terminal device side.

The present disclosure also provides a computer program product or a computer program including computer instructions stored in a computer-readable storage medium from which a processor of the network device reads and executes the computer instructions to perform the above method for controlling cell access of the network device side.

It should be understood that the reference to "indication" in embodiments of the present disclosure may be a direct indication, may be an indirect indication, or may be indicative of an association. For example, A indicating B may represent that A directly indicates B, for example, B may be obtained by A; may also represent that A indirectly indicates B, for example, A indicates C, and B may be obtained by C; and may also represent that there is an association between A and B.

In the description of embodiments of the present disclosure, the term "corresponding" may represent that there is a direct correspondence or an indirect correspondence relationship between the listed objects, may also represent that there is an association between the listed objects, and may also be a relationship of indicating and being indicated, configuring and being configured, etc.

The term "Multiple" mentioned herein refers to two or more. "And/or", which describes the association of associated objects, represents that there may be three relationships, for example, the association A and/or B, may represent that there are three situations: A alone, A and B, and B alone. The character "/" generally represents that the related objects are in an "or" relationship.

In addition, the step numbers described herein only exemplify a possible performing sequence between the steps, and in some other embodiments, the above steps may also be performed not in the sequence of numbering, such as two different numbered steps being performed simultaneously, or two different numbered steps being performed in the reverse sequence to the illustration, which is not limited by embodiments of the present disclosure.

Those skilled in the art will appreciate that in one or more of the above examples, the functions described in embodiments of the present disclosure may be implemented in hardware, software, firmware or any combination thereof. When implemented in software, these functions may be stored in a computer-readable medium or transmitted as one or more instructions or codes on the computer-readable medium. The computer-readable medium includes a computer storage medium and a communication medium, where the communication medium includes any medium that facilitates the transfer of a computer program from one place to another. The storage medium may be any available medium accessible to a general-purpose or special-purpose computer.

The above description is only exemplary embodiments of the present disclosure and is not intended to limit the present disclosure. The scope of protection of the invention shall be subject to the scope of protection of the claims.

## Claims

1. A method for controlling cell access, performed by a terminal device, the method comprising:
determining (520) whether the terminal device is allowed to access a cell corresponding to a network device or barred from accessing the cell according to first information from the network device and a terminal type of the terminal device;
wherein the terminal type comprises at least a first terminal type and a second terminal type, a terminal device with the first terminal type has a Timing Advance, TA, pre-compensation capability and a Global Navigation Satellite System, GNSS, positioning capability, and a terminal device with the second terminal type has no TA pre-compensation capability or GNSS positioning capability or has neither the TA pre-compensation capability nor the GNSS positioning capability, wherein the first information is used for determining whether a respective terminal device corresponding to each of the first terminal type and the second terminal type is allowed to access the cell or barred from accessing the cell,
wherein said determining (520) whether the terminal device is allowed to access the cell corresponding to the network device or barred from accessing the cell according to the first information from the network device and the terminal type of the terminal device comprises:
in response to the terminal device being of the first terminal type, determining whether the terminal device corresponding to the first terminal type is allowed to access the cell or barred from accessing the cell based on the first information;
in response to the first information indicating that the terminal device corresponding to the first terminal type is allowed to access the cell, determining that the terminal device is allowed to access the cell; and
in response to the first information indicating that the terminal device corresponding to the first terminal type is barred from accessing the cell, determining whether the terminal device corresponding to the second terminal type is allowed to access the cell or barred from accessing the cell based on the first information, and in response to the first information further indicating that the terminal device corresponding to the second terminal type is allowed to access the cell, determining that the terminal device being of the first terminal type is allowed to access the cell and accessing the cell without using the TA pre-compensation capability.

2. The method of claim 1, wherein determining (520) whether the terminal device is allowed to access the cell corresponding to the network device or barred from accessing the cell according to the first information from the network device and the terminal type of the terminal device further comprises:
in response to the terminal device being of the second terminal type and the first information indicating that the terminal device corresponding to the second terminal type is allowed to access the cell, determining that the terminal device is allowed to access the cell.

3. The method of claim 1, wherein the method further comprises:
when determining that the terminal device being of the first terminal type is allowed to access the cell in response to the first information further indicating that the terminal device corresponding to the second terminal type is allowed to access the cell,
performing a random access by using a random access resource configured for the second terminal type.

4. The method of any one of claims 1 to 3, wherein the first information comprises cellBarred information, the cellBarred information indicating Barred represents that the access is barred, and the cellBarred information indicating NotBarred represents that the access is allowed.

5. The method of any one of claims 1 to 4, wherein the first information comprises random access resource configuration information indicating that the access is allowed or barred, and wherein at least one of the following applies:
a fact that the random access resource configuration information is associated with the first terminal type indicates that the terminal device corresponding to the first terminal type is allowed to access the cell; or
a fact that the random access resource configuration information is associated with the second terminal type indicates that the terminal device corresponding to the first terminal type is allowed to access the cell.

6. The method of any one of claims 1 to 4, wherein the first information comprises Unified Access Control, UAC, configuration information, and the UAC configuration information is used for the terminal device to determine whether the terminal device is allowed to access the cell or barred from accessing the cell according to a UAC check result, and wherein at least one of the following applies:
in response to a UAC check performed based on the UAC configuration information corresponding to the first terminal type being successful, determining that the terminal device corresponding to the first terminal type is allowed to access the cell; or
in response to a UAC check performed based on the UAC configuration information corresponding to the second terminal type being successful, determining that the terminal device corresponding to the first terminal type is allowed to access the cell.

7. The method of any one of claims 1 to 6, further comprising:
receiving the first information from the network device through system information.

8. The method of claim 7, wherein
the first information is contained in its entirety in a Main Information Block, MIB; or
the first information is contained in its entirety in a System Information Block, SIB; or
the first information is distributed in an MIB and at least one SIB; or
the first information is distributed in a plurality of SIBs.

9. A terminal device, comprising:
a determination module (1210), configured to determine whether the terminal device is allowed to access a cell corresponding to a network device or barred from accessing the cell according to first information from the network device and a terminal type of the terminal device;
wherein the terminal type comprises at least a first terminal type and a second terminal type, and the terminal device with the first terminal type has a Timing Advance, TA, pre-compensation capability and a Global Navigation Satellite System, GNSS, positioning capability, and the terminal device with the second terminal type has no TA pre-compensation capability or GNSS positioning capability or has neither the TA pre-compensation capability nor the GNSS positioning capability, wherein the first information is used for determining whether a respective terminal device corresponding to each of the first terminal type and the second terminal type is allowed to access the cell or barred from accessing the cell,
wherein the determination module (1210) is specifically configured to:
in response to the terminal device being of the first terminal type, determine whether the terminal device corresponding to the first terminal type is allowed to access the cell or barred from accessing the cell based on the first information;
in response to the first information indicating that the terminal device corresponding to the first terminal type is allowed to access the cell, determine that the terminal device is allowed to access the cell; and
in response to the first information indicating that the terminal device corresponding to the first terminal type is barred from accessing the cell, determine whether the terminal device corresponding to the second terminal type is allowed to access the cell or barred from accessing the cell based on the first information, and in response to the first information further indicating that the terminal device corresponding to the second terminal type is allowed to access the cell, determine that the terminal device being of the first terminal type is allowed to access the cell and access the cell without using the TA pre-compensation capability.

10. The terminal device of claim 9, wherein the determination module (1210) is further configured to:
in response to the terminal device being of the second terminal type and the first information indicating that the terminal device corresponding to the second terminal type is allowed to access the cell, determine that the terminal device is allowed to access the cell.

11. The terminal device of claim 9, wherein the access module (1220) is configured to :
perform a random access by using a random access resource configured for the second terminal type, when the determination module (1210) determines that the terminal device being of the first terminal type is allowed to access the cell in response to the first information further indicating that the terminal device corresponding to the second terminal type is allowed to access the cell.

12. The terminal device of any one of claims 9 to 11, wherein the first information comprises cellBarred information, the cellBarred information indicating Barred represents that the access is barred, and the cellBarred information indicating NotBarred represents that the access is allowed.

13. The terminal device of any one of claims 9 to 12, wherein the first information comprises random access resource configuration information indicating that the access is allowed or barred, and wherein at least one of the following applies:
a fact that the random access resource configuration information is associated with the first terminal type indicates that the terminal device corresponding to the first terminal type is allowed to access the cell; or
a fact that the random access resource configuration information is associated with the second terminal type indicates that the terminal device corresponding to the first terminal type is allowed to access the cell.

14. The terminal device of any one of claims 9 to 12, wherein the first information comprises Unified Access Control, UAC, configuration information, and the UAC configuration information is used for the terminal device to determine whether the terminal device is allowed to access the cell or barred from accessing the cell according to a UAC check result, and wherein the determination module (1210) is further configured to perform at least one of:
in response to a UAC check performed based on the UAC configuration information corresponding to the first terminal type being successful, determine that the terminal device corresponding to the first terminal type is allowed to access the cell; or
in response to a UAC check performed based on the UAC configuration information corresponding to the second terminal type being successful, determine that the terminal device corresponding to the first terminal type is allowed to access the cell.

15. The terminal device of any one of claims 9 to 14, further comprising:
a receiving module (1230), configured to receive the first information from the network device through system information, and wherein
the first information is contained in its entirety in a Main Information Block, MIB; or
the first information is contained in its entirety in a System Information Block, SIB; or
the first information is distributed in an MIB and at least one SIB; or
the first information is distributed in a plurality of SIBs.

## Patentansprüche

1. Verfahren zum Steuern eines Zellenzugriffs, das durch eine Endgeräteinrichtung durchgeführt wird, wobei das Verfahren Folgendes umfasst:
Bestimmen (520), ob der Endgeräteinrichtung der Zugriff auf eine mit einer Netzeinrichtung korrespondierende Zelle gewährt wird oder der Zugriff auf die Zelle verweigert wird, gemäß ersten Informationen von der Netzeinrichtung und einem Endgerättyp der Endgeräteinrichtung;
wobei der Endgerättyp mindestens einen ersten Endgerättyp und einen zweiten Endgerättyp umfasst, eine Endgeräteinrichtung mit dem ersten Endgerättyp eine Timing-Advance-Vorkompensationsfähigkeit, TA-Vorkompensationsfähigkeit, und eine Global-Navigation-Satellite-System-Positionsbestimmungsfähigkeit, GNSS-Positionsbestimmungsfähigkeit, aufweist und eine Endgeräteinrichtung mit dem zweiten Endgerättyp keine TA-Vorkompensationsfähigkeit oder GNSS-Positionsbestimmungsfähigkeit aufweist oder weder die TA-Vorkompensationsfähigkeit noch die GNSS-Positionsbestimmungsfähigkeit aufweist, wobei die ersten Informationen zum Bestimmen, ob einer jeweiligen mit jedem von dem ersten Endgerättyp und dem zweiten Endgerättyp korrespondierenden Endgeräteinrichtung der Zugriff auf die Zelle gewährt wird oder der Zugriff auf die Zelle verweigert wird, verwendet werden,
wobei das Bestimmen (520), ob der Endgeräteinrichtung der Zugriff auf die mit der Netzeinrichtung korrespondierende Zelle gewährt wird oder der Zugriff auf die Zelle verweigert wird, gemäß den ersten Informationen von der Netzeinrichtung und dem Endgerättyp der Endgeräteinrichtung Folgendes umfasst:
als Reaktion darauf, dass die Endgeräteinrichtung von dem ersten Endgerättyp ist, Bestimmen, ob der mit dem ersten Endgerättyp korrespondierenden Endgeräteinrichtung der Zugriff auf die Zelle gewährt wird oder der Zugriff auf die Zelle verweigert wird, basierend auf den ersten Informationen;
als Reaktion darauf, dass die ersten Informationen anzeigen, dass der mit dem ersten Endgerättyp korrespondierenden Endgeräteinrichtung der Zugriff auf die Zelle gewährt wird, Bestimmen, dass der Endgeräteinrichtung der Zugriff auf die Zelle gewährt wird; und
als Reaktion darauf, dass die ersten Informationen anzeigen, dass der mit dem ersten Endgerättyp korrespondierenden Endgeräteinrichtung der Zugriff auf die Zelle verweigert wird, Bestimmen, ob der mit dem zweiten Endgerättyp korrespondierenden Endgeräteinrichtung der Zugriff auf die Zelle gewährt wird oder der Zugriff auf die Zelle verweigert wird, basierend auf den ersten Informationen und als Reaktion darauf, dass die ersten Informationen ferner anzeigen, dass der mit dem zweiten Endgerättyp korrespondierenden Endgeräteinrichtung der Zugriff auf die Zelle gewährt wird, Bestimmen, dass der Endgeräteinrichtung, die von dem ersten Endgerättyp ist, der Zugriff auf die Zelle gewährt wird, und Zugreifen auf die Zelle ohne Verwenden der TA-Vorkompensationsfähigkeit.

2. Verfahren nach Anspruch 1, wobei das Bestimmen (520), ob der Endgeräteinrichtung der Zugriff auf die mit der Netzeinrichtung korrespondierende Zelle gewährt wird oder der Zugriff auf die Zelle verweigert wird, gemäß den ersten Informationen von der Netzeinrichtung und dem Endgerättyp der Endgeräteinrichtung ferner Folgendes umfasst:
als Reaktion darauf, dass die Endgeräteinrichtung von dem zweiten Endgerättyp ist und die ersten Informationen anzeigen, dass der mit dem zweiten Endgerättyp korrespondierenden Endgeräteinrichtung der Zugriff auf die Zelle gewährt wird, Bestimmen, dass der Endgeräteinrichtung der Zugriff auf die Zelle gewährt wird.

3. Verfahren nach Anspruch 1, wobei das Verfahren ferner Folgendes umfasst:
beim Bestimmen, dass der Endgeräteinrichtung, die von dem ersten Endgerättyp ist, der Zugriff auf die Zelle gewährt wird, als Reaktion darauf, dass die ersten Informationen ferner anzeigen, dass der mit dem zweiten Endgerättyp korrespondierenden Endgeräteinrichtung der Zugriff auf die Zelle gewährt wird, Durchführen eines Direktzugriffs unter Verwendung einer für den zweiten Endgerättyp konfigurierten Direktzugriffsressource.

4. Verfahren nach einem der Ansprüche 1 bis 3, wobei die ersten Informationen cellBarred-Informationen umfassen, die cellBarred-Informationen, die Barred anzeigen, darstellen, dass der Zugriff verweigert wird, und die cellBarred-Informationen, die NotBarred anzeigen, darstellen, dass der Zugriff gewährt wird.

5. Verfahren nach einem der Ansprüche 1 bis 4, wobei die ersten Informationen Direktzugriffsressourcenkonfigurationsinformationen umfassen, die anzeigen, dass der Zugriff gewährt oder verweigert wird, und wobei mindestens eines von Folgendem gilt:
eine Gegebenheit, dass die Direktzugriffsressourcenkonfigurationsinformationen dem ersten Endgerättyp zugeordnet sind, zeigt an, dass der mit dem ersten Endgerättyp korrespondierenden Endgeräteinrichtung der Zugriff auf die Zelle gewährt wird; oder
eine Gegebenheit, dass die Direktzugriffsressourcenkonfigurationsinformationen dem zweiten Endgerättyp zugeordnet sind, zeigt an, dass der mit dem ersten Endgerättyp korrespondierenden Endgeräteinrichtung der Zugriff auf die Zelle gewährt wird.

6. Verfahren nach einem der Ansprüche 1 bis 4, wobei die ersten Informationen Unified-Access-Control-Konfigurationsinformationen, UAC-Konfigurationsinformationen, umfassen und die UAC-Konfigurationsinformationen dafür verwendet werden, dass die Endgeräteinrichtung gemäß einem UAC-Prüfungsergebnis bestimmt, ob der Endgeräteinrichtung der Zugriff auf die Zelle gewährt wird oder der Zugriff auf die Zelle verweigert wird, und wobei mindestens eines von Folgendem gilt:
als Reaktion darauf, dass eine UAC-Prüfung, die basierend auf den mit dem ersten Endgerättyp korrespondierenden UAC-Konfigurationsinformationen durchgeführt wird, erfolgreich ist, Bestimmen, dass der mit dem ersten Endgerättyp korrespondierenden Endgeräteinrichtung der Zugriff auf die Zelle gewährt wird; oder
als Reaktion darauf, dass eine UAC-Prüfung, die basierend auf den mit dem zweiten Endgerättyp korrespondierenden UAC-Konfigurationsinformationen durchgeführt wird, erfolgreich ist, Bestimmen, dass der mit dem ersten Endgerättyp korrespondierenden Endgeräteinrichtung der Zugriff auf die Zelle gewährt wird.

7. Verfahren nach einem der Ansprüche 1 bis 6, das ferner Folgendes umfasst:
Empfangen der ersten Informationen von der Netzeinrichtung durch Systeminformationen.

8. Verfahren nach Anspruch 7, wobei
die ersten Informationen in ihrer Gesamtheit in einem Main Information Block, MIB, enthalten sind; oder
die ersten Informationen in ihrer Gesamtheit in einem System Information Block, SIB, enthalten sind; oder
die ersten Informationen in einem MIB und mindestens einem SIB verteilt sind; oder
die ersten Informationen in einer Vielzahl von SIBs verteilt sind.

9. Endgeräteinrichtung, die Folgendes umfasst:
ein Bestimmungsmodul (1210), das konfiguriert ist, um gemäß ersten Informationen von einer Netzeinrichtung und einem Endgerättyp der Endgeräteinrichtung zu bestimmen, ob der Endgeräteinrichtung der Zugriff auf eine mit der Netzeinrichtung korrespondierende Zelle gewährt wird oder der Zugriff auf die Zelle verweigert wird;
wobei der Endgerättyp mindestens einen ersten Endgerättyp und einen zweiten Endgerättyp umfasst und die Endgeräteinrichtung mit dem ersten Endgerättyp eine Timing-Advance-Vorkompensationsfähigkeit, TA-Vorkompensationsfähigkeit, und eine Global-Navigation-Satellite-System-Positionsbestimmungsfähigkeit, GNSS-Positionsbestimmungsfähigkeit, aufweist und die Endgeräteinrichtung mit dem zweiten Endgerättyp keine TA-Vorkompensationsfähigkeit oder GNSS-Positionsbestimmungsfähigkeit aufweist oder weder die TA-Vorkompensationsfähigkeit noch die GNSS-Positionsbestimmungsfähigkeit aufweist, wobei die ersten Informationen zum Bestimmen, ob einer jeweiligen mit jedem von dem ersten Endgerättyp und dem zweiten Endgerättyp korrespondierenden Endgeräteinrichtung der Zugriff auf die Zelle gewährt wird oder der Zugriff auf die Zelle verweigert wird, verwendet werden,
wobei das Bestimmungsmodul (1210) speziell für Folgendes konfiguriert ist:
als Reaktion darauf, dass die Endgeräteinrichtung von dem ersten Endgerättyp ist, Bestimmen, ob der mit dem ersten Endgerättyp korrespondierenden Endgeräteinrichtung der Zugriff auf die Zelle gewährt wird oder der Zugriff auf die Zelle verweigert wird, basierend auf den ersten Informationen;
als Reaktion darauf, dass die ersten Informationen anzeigen, dass der mit dem ersten Endgerättyp korrespondierenden Endgeräteinrichtung der Zugriff auf die Zelle gewährt wird, Bestimmen, dass der Endgeräteinrichtung der Zugriff auf die Zelle gewährt wird; und
als Reaktion darauf, dass die ersten Informationen anzeigen, dass der mit dem ersten Endgerättyp korrespondierenden Endgeräteinrichtung der Zugriff auf die Zelle verweigert wird, Bestimmen, ob der mit dem zweiten Endgerättyp korrespondierenden Endgeräteinrichtung der Zugriff auf die Zelle gewährt wird oder der Zugriff auf die Zelle verweigert wird, basierend auf den ersten Informationen und als Reaktion darauf, dass die ersten Informationen ferner anzeigen, dass der mit dem zweiten Endgerättyp korrespondierenden Endgeräteinrichtung der Zugriff auf die Zelle gewährt wird, Bestimmen, dass der Endgeräteinrichtung, die von dem ersten Endgerättyp ist, der Zugriff auf die Zelle gewährt wird, und Zugreifen auf die Zelle ohne Verwenden der TA-Vorkompensationsfähigkeit.

10. Endgeräteinrichtung nach Anspruch 9, wobei das Bestimmungsmodul (1210) ferner für Folgendes konfiguriert ist:
als Reaktion darauf, dass die Endgeräteinrichtung von dem zweiten Endgerättyp ist und die ersten Informationen anzeigen, dass der mit dem zweiten Endgerättyp korrespondierenden Endgeräteinrichtung der Zugriff auf die Zelle gewährt wird, Bestimmen, dass der Endgeräteinrichtung der Zugriff auf die Zelle gewährt wird.

11. Endgeräteinrichtung nach Anspruch 9, wobei das Zugriffsmodul (1220) für Folgendes konfiguriert ist:
Durchführen eines Direktzugriffs unter Verwendung einer für den zweiten Endgerättyp konfigurierten Direktzugriffsressource, wenn das Bestimmungsmodul (1210) bestimmt, dass der Endgeräteinrichtung, die von dem ersten Endgerättyp ist, der Zugriff auf die Zelle gewährt wird, als Reaktion darauf, dass die ersten Informationen ferner anzeigen, dass der mit dem zweiten Endgerättyp korrespondierenden Endgeräteinrichtung der Zugriff auf die Zelle gewährt wird.

12. Endgeräteinrichtung nach einem der Ansprüche 9 bis 11, wobei die ersten Informationen cellBarred-Informationen umfassen, die cellBarred-Informationen, die Barred anzeigen, darstellen, dass der Zugriff verweigert wird, und die cellBarred-Informationen, die NotBarred anzeigen, darstellen, dass der Zugriff gewährt wird.

13. Endgeräteinrichtung nach einem der Ansprüche 9 bis 12, wobei die ersten Informationen Direktzugriffsressourcenkonfigurationsinformationen umfassen, die anzeigen, dass der Zugriff gewährt oder verweigert wird, und wobei mindestens eines von Folgendem gilt:
eine Gegebenheit, dass die Direktzugriffsressourcenkonfigurationsinformationen dem ersten Endgerättyp zugeordnet sind, zeigt an, dass der mit dem ersten Endgerättyp korrespondierenden Endgeräteinrichtung der Zugriff auf die Zelle gewährt wird; oder
eine Gegebenheit, dass die Direktzugriffsressourcenkonfigurationsinformationen dem zweiten Endgerättyp zugeordnet sind, zeigt an, dass der mit dem ersten Endgerättyp korrespondierenden Endgeräteinrichtung der Zugriff auf die Zelle gewährt wird.

14. Endgeräteinrichtung nach einem der Ansprüche 9 bis 12, wobei die ersten Informationen Unified-Access-Control-Konfigurationsinformationen, UAC-Konfigurationsinformationen, umfassen und die UAC-Konfigurationsinformationen dafür verwendet werden, dass die Endgeräteinrichtung gemäß einem UAC-Prüfungsergebnis bestimmt, ob der Endgeräteinrichtung der Zugriff auf die Zelle gewährt wird oder der Zugriff auf die Zelle verweigert wird, und wobei das Bestimmungsmodul (1210) ferner konfiguriert ist, um mindestens eines von Folgendem durchzuführen:
als Reaktion darauf, dass eine UAC-Prüfung, die basierend auf den mit dem ersten Endgerättyp korrespondierenden UAC-Konfigurationsinformationen durchgeführt wird, erfolgreich ist, Bestimmen, dass der mit dem ersten Endgerättyp korrespondierenden Endgeräteinrichtung der Zugriff auf die Zelle gewährt wird; oder
als Reaktion darauf, dass eine UAC-Prüfung, die basierend auf den mit dem zweiten Endgerättyp korrespondierenden UAC-Konfigurationsinformationen durchgeführt wird, erfolgreich ist, Bestimmen, dass der mit dem ersten Endgerättyp korrespondierenden Endgeräteinrichtung der Zugriff auf die Zelle gewährt wird.

15. Endgeräteinrichtung nach einem der Ansprüche 9 bis 14, die ferner Folgendes umfasst:
ein Empfangsmodul (1230), das konfiguriert ist, um die ersten Informationen von der Netzeinrichtung durch Systeminformationen zu empfangen, und wobei
die ersten Informationen in ihrer Gesamtheit in einem Main Information Block, MIB, enthalten sind; oder
die ersten Informationen in ihrer Gesamtheit in einem System Information Block, SIB, enthalten sind; oder
die ersten Informationen in einem MIB und mindestens einem SIB verteilt sind; oder
die ersten Informationen in einer Vielzahl von SIBs verteilt sind.

## Revendications

1. Procédé pour contrôler l'accès à une cellule, exécuté par un dispositif terminal, ce procédé comprenant :
la détermination (520) de si le dispositif terminal est autorisé à accéder à une cellule correspondant à un périphérique réseau ou interdit d'accéder à cette cellule selon des premières informations venant du périphérique réseau, et d'un type de terminal du dispositif terminal ;
le type de terminal comprenant au moins un premier type de terminal et un deuxième type de terminal, un dispositif terminal avec le premier type de terminal ayant une capacité de pré-compensation d'avance temporelle, TA, et une capacité de positionnement de système mondial de navigation par satellite, GNSS, et un dispositif terminal avec le deuxième type de terminal n'ayant aucune capacité de pré-compensation TA ou aucune capacité de positionnement GNSS, ou n'ayant ni la capacité de pré-compensation TA, ni la capacité de positionnement GNSS, les premières informations étant utilisées pour déterminer si un dispositif terminal respectif correspondant à chacun du premier type de terminal et du deuxième type de terminal est autorisé à accéder à la cellule ou interdit d'accéder à la cellule,
ladite détermination (520) de si le dispositif terminal est autorisé à accéder à la cellule correspondant au périphérique réseau ou interdit d'accéder à cette cellule selon les premières informations venant du périphérique réseau, et du type de terminal du dispositif terminal comprenant :
en réponse au fait que le dispositif terminal est du premier type de terminal, la détermination de si le dispositif terminal correspondant au premier type de terminal est autorisé à accéder à la cellule ou interdit d'accéder à la cellule en se basant sur les premières informations ;
en réponse au fait que les premières informations indiquent que le dispositif terminal correspondant au premier type de terminal est autorisé à accéder à la cellule, la détermination que ce dispositif terminal est autorisé à accéder à la cellule ; et
en réponse au fait que les premières informations indiquent que le dispositif terminal correspondant au premier type de terminal est interdit d'accéder à la cellule, la détermination de si le dispositif terminal correspondant au deuxième type de terminal est autorisé à accéder à la cellule ou interdit d'accéder à la cellule en se basant sur les premières informations, et, en réponse au fait que les premières informations indiquent en outre que le dispositif terminal correspondant au deuxième type de terminal est autorisé à accéder à la cellule, la détermination que le dispositif terminal étant du premier type de terminal est autorisé à accéder à la cellule et accède à la cellule sans utiliser la capacité de pré-compensation TA.

2. Procédé selon la revendication 1, dans lequel la détermination (520) de si le dispositif terminal est autorisé à accéder à la cellule correspondant au périphérique réseau ou interdit d'accéder à cette cellule selon les premières informations venant du périphérique réseau et du type de terminal du dispositif terminal comprend en outre :
en réponse au fait que le dispositif terminal est du deuxième type de terminal et au fait que les premières informations indiquent que le dispositif terminal correspondant au deuxième type de terminal est autorisé à accéder à la cellule, la détermination que ce dispositif terminal est autorisé à accéder à la cellule.

3. Procédé selon la revendication 1,
ce procédé comprenant en outre :
lorsqu'il est déterminé que le dispositif terminal étant du premier type de terminal est autorisé à accéder à la cellule en réponse au fait que les premières informations indiquent en outre que le dispositif terminal correspondant au deuxième type de terminal est autorisé à accéder à la cellule,
l'exécution d'un accès aléatoire en utilisant une ressource d'accès aléatoire configurée pour le deuxième type de terminal.

4. Procédé selon l'une quelconque des revendications 1 à 3, dans lequel les premières informations comprennent une information cellBarred (interdit cellule), cette information cellBarred indiquant que Barred (interdit) représente que l'accès est interdit, et cette information cellBarred indiquant que NotBarred (pas interdit) représente que l'accès est permis.

5. Procédé selon l'une quelconque des revendications 1 à 4, dans lequel les premières informations comprennent une information de configuration de ressource d'accès aléatoire indiquant que l'accès est autorisé ou interdit, et dans lequel au moins une des indications ci-dessous est applicable :
un fait que l'information de configuration de ressource d'accès aléatoire est associée au premier type de terminal indique que le dispositif terminal correspondant au premier type de terminal est autorisé à accéder à la cellule ; ou
un fait que l'information de configuration de ressource d'accès aléatoire est associée au deuxième type de terminal indique que le dispositif terminal correspondant au premier type de terminal est autorisé à accéder à la cellule.

6. Procédé selon l'une quelconque des revendications 1 à 4, dans lequel les premières informations comprennent une information de configuration de contrôle d'accès unifié, UAC, et dans lequel cette information de configuration UAC est utilisée pour que le dispositif terminal détermine si le dispositif terminal est autorisé à accéder à la cellule ou interdit d'accéder à la cellule selon le résultat d'une vérification UAC, et dans lequel au moins une des affirmations suivantes est applicable :
en réponse au succès d'une vérification UAC exécutée en se basant sur l'information de configuration UAC correspondant au premier type de terminal, la détermination que le dispositif terminal correspondant au premier type de terminal est autorisé à accéder à la cellule ; ou
en réponse au succès d'une vérification UAC exécutée en se basant sur l'information de configuration UAC correspondant au deuxième type de terminal, la détermination que le dispositif terminal correspondant au premier type de terminal est autorisé à accéder à la cellule.

7. Procédé selon l'une quelconque des revendications 1 à 6, comprenant en outre :
la réception des premières informations en provenance du périphérique réseau par l'intermédiaire d'informations système.

8. Procédé selon la revendication 7, dans lequel
les premières informations sont contenues dans leur totalité dans un bloc d'informations principal, MIB ; ou
les premières informations sont contenues dans leur totalité dans un bloc d'informations système, SIB ; ou
les premières informations sont réparties dans un MIB et dans au moins un SIB; ou
les premières informations sont réparties dans une pluralité de SIB.

9. Dispositif terminal, comprenant :
un module de détermination (1210), configuré de façon à déterminer si le dispositif terminal est autorisé à accéder à une cellule correspondant à un périphérique réseau ou interdit d'accéder à cette cellule selon les premières informations venant du périphérique réseau, et un type de terminal du dispositif terminal ;
le type de terminal comprenant au moins un premier type de terminal et un deuxième type de terminal, et le dispositif terminal avec le premier type de terminal ayant une capacité de pré-compensation d'avance temporelle, TA, et une capacité de positionnement de système mondial de navigation par satellite, GNSS, et le dispositif terminal avec le deuxième type de terminal n'ayant aucune capacité de pré-compensation TA ou aucune capacité de positionnement GNSS, ou n'ayant ni la capacité de pré-compensation TA, ni la capacité de positionnement GNSS, les premières informations étant utilisées pour déterminer si un dispositif terminal respectif correspondant à chacun du premier type de terminal et du deuxième type de terminal est autorisé à accéder à la cellule ou interdit d'accéder à la cellule,
ce module de détermination (1210) étant configuré spécifiquement de façon à :
en réponse au fait que le dispositif terminal est du premier type de terminal, déterminer si le dispositif terminal correspondant au premier type de terminal est autorisé à accéder à la cellule ou interdit d'accéder à la cellule en se basant sur les premières informations ;
en réponse au fait que les premières informations indiquent que le dispositif terminal correspondant au premier type de terminal est autorisé à accéder à la cellule, déterminer que ce dispositif terminal est autorisé à accéder à la cellule ; et de façon à
en réponse au fait que les premières informations indiquent que le dispositif terminal correspondant au premier type de terminal est interdit d'accéder à la cellule, déterminer si le dispositif terminal correspondant au deuxième type de terminal est autorisé à accéder à la cellule ou interdit d'accéder à la cellule en se basant sur les premières informations, et à, en réponse au fait que les premières informations indiquent en outre que le dispositif terminal correspondant au deuxième type de terminal est autorisé à accéder à la cellule, déterminer que le dispositif terminal étant du premier type de terminal est autorisé à accéder à la cellule et à accéder à la cellule sans utiliser la capacité de pré-compensation TA.

10. Dispositif terminal selon la revendication 9, dans lequel le module de détermination (1210) est configuré en outre de façon à :
en réponse au fait que le dispositif terminal est du deuxième type de terminal et au fait que les premières informations indiquent que le dispositif terminal correspondant au deuxième type de terminal est autorisé à accéder à la cellule, déterminer que ce dispositif terminal est autorisé à accéder à la cellule.

11. Dispositif terminal selon la revendication 9, dans lequel le module d'accès (1220) est configuré de façon à :
exécuter un accès aléatoire en utilisant une ressource d'accès aléatoire pour le deuxième type de terminal, lorsque le module de détermination (1210) détermine que le dispositif terminal étant du premier type de terminal est autorisé à accéder à la cellule en réponse au fait que premières informations indiquent en outre que le dispositif terminal correspondant au deuxième type de terminal est autorisé à accéder à la cellule.

12. Dispositif terminal selon l'une quelconque des revendications 9 à 11, dans lequel les premières informations comprennent une information cellBarred (interdit cellule), cette information cellBarred indiquant que Barred (interdit) représente que l'accès est interdit, et cette information cellBarred indiquant que NotBarred (pas interdit) représente que l'accès est permis.

13. Dispositif terminal selon l'une quelconque des revendications 9 à 12, dans lequel les premières informations comprennent une information de configuration de ressource d'accès aléatoire indiquant que l'accès est autorisé ou interdit, et dans lequel au moins une des indications ci-dessous est applicable :
un fait que l'information de configuration de ressource d'accès aléatoire est associée au premier type de terminal indique que le dispositif terminal correspondant au premier type de terminal est autorisé à accéder à la cellule ; ou
un fait que l'information de configuration de ressource d'accès aléatoire est associée au deuxième type de terminal indique que le dispositif terminal correspondant au premier type de terminal est autorisé à accéder à la cellule.

14. Dispositif terminal selon l'une quelconque des revendications 9 à 12, dans lequel les premières informations comprennent une information de configuration de contrôle d'accès unifié, UAC, et dans lequel cette information de configuration UAC est utilisée pour que le dispositif terminal détermine si le dispositif terminal est autorisé à accéder à la cellule ou interdit d'accéder à la cellule selon le résultat d'une vérification UAC, et dans lequel le module de détermination (1210) est configuré en outre de façon à exécuter au moins une des opérations suivantes :
en réponse au succès d'une vérification UAC exécutée en se basant sur l'information de configuration UAC correspondant au premier type de terminal, déterminer que le dispositif terminal correspondant au premier type de terminal est autorisé à accéder à la cellule ; ou
en réponse au succès d'une vérification UAC exécutée en se basant sur l'information de configuration UAC correspondant au deuxième type de terminal, déterminer que le dispositif terminal correspondant au premier type de terminal est autorisé à accéder à la cellule.

15. Dispositif terminal selon l'une quelconque des revendications 9 à 14, comprenant en outre :
un module de réception (1230), configuré de façon à recevoir les premières informations en provenance du périphérique réseau par l'intermédiaire d'informations système, et dans lequel
les premières informations sont contenues dans leur totalité dans un bloc d'informations principal, MIB ; ou
les premières informations sont contenues dans leur totalité dans un bloc d'informations système, SIB ; ou
les premières informations sont réparties dans un bloc MBI et dans au moins un bloc SIB ; ou
les premières informations sont réparties dans une pluralité de blocs SIB.
